# EUROPEAN PATENT APPLICATION

(11) **EP 4 185 005 A1**
(43) Date of publication of application: **24.05.2023**
(21) Application number: 20945967.6
(22) Date of filing: 23.07.2020
(51) Int. Cl.: H04W 36/00

(54) **COMMUNICATION METHOD AND COMMUNICATION APPARATUS FOR INTEGRATED ACCESS AND BACKHAUL (IAB) SYSTEM**

(71) Applicant: Huawei Technologies Co., Ltd., Shenzhen, Guangdong 518129 (CN)
(72) Inventor: ZHU, Yuanping, Shenzhen, Guangdong 518129 (CN); LIU, Jing, Shenzhen, Guangdong 518129 (CN); LUO, Haiyan, Shenzhen, Guangdong 518129 (CN); SHI, Yulong, Shenzhen, Guangdong 518129 (CN)
(74) Representative: Isarpatent
(86) International application number: PCT/CN2020/103893
(87) International publication number: WO 2022/016473

(57) **Abstract**

This application provides a communication method applied to an integrated access and backhaul IAB system. The method includes: A child node receives a first radio resource control RRC reconfiguration message from an access network device via a parent node, where the first RRC reconfiguration message includes a random access-free indication. The child node starts a timer. The child node sends a first RRC reconfiguration complete message to the access network device via the parent node. The child node receives first indication information from the parent node, where the first indication information indicates to stop the timer. The child node stops the timer.

## Description

### TECHNICAL FIELD

This application relates to the field of wireless communication technologies, and in particular, to a communication method applied to an integrated access and backhaul IAB system and a communication apparatus.

### BACKGROUND

Compared with a 4th generation mobile communication system, a 5th generation (fifth generation, 5G) mobile communication system imposes stricter requirements on various network performance indicators in an all-round way. For example, a capacity indicator is increased by 1000 times, wider coverage is required, and ultra-high reliability and an ultra-low latency are required. An integrated access and backhaul (Integrated access and backhaul, IAB) system emerges to provide a flexible and convenient access and backhaul service for a terminal via a large quantity of densely deployed nodes, to improve coverage and satisfy stricter performance indicators of 5G.

In relay systems such as the IAB system, a relay node may be handed over due to link quality or the like. Handover of the relay node affects another node or a terminal in the IAB system, and causes service transmission interruption. Consequently, user experience is greatly reduced.

### SUMMARY

This application provides a communication method applied to an integrated access and backhaul IAB system, a communication apparatus, and a communication system. According to this application, in a random access-free process of a child node, the child node can stop a timer in a timely manner, thereby avoiding a handover failure caused by timeout of the timer, improving a handover success rate, reducing a handover delay, and ensuring handover performance.

With reference to a first aspect to a third aspect, the following describes the solutions provided in embodiments of this application. It should be noted that the first aspect to the third aspect describe the solutions from perspectives of different network elements, and content of the solutions may be mutually referenced and cited.

The first aspect of this application provides a communication method applied to an integrated access and backhaul IAB system. The method may be performed by a child node, or may be performed by a chip in the child node. The following uses an example in which the child node performs the method for description. The method includes: The child node receives a first radio resource control RRC reconfiguration message from an access network device via a parent node, where the first RRC reconfiguration message includes a random access-free indication. The child node starts a timer after receiving the first RRC reconfiguration message. The child node sends a first RRC reconfiguration complete message to the access network device via the parent node. The child node receives first indication information from the parent node, where the first indication information indicates to stop the timer. The child node stops the timer based on the first indication information.

The parent node sends the first indication information to the child node, so that the child node may stop the timer in a timely manner, so as to avoid a handover failure and cell reselection caused by timeout of the timer, reduce a handover delay, and ensure communication performance after handover.

In a possible implementation, the first indication information may indicate to stop the timer in an explicit manner or an implicit manner. The following describes two implicit manners.

Optionally, the first indication information is a first-type media access control control element MAC CE. The child node stops the timer by default after receiving the first-type MAC CE.

Alternatively, optionally, the first indication information is a MAC CE carrying a contention resolution identity. The contention resolution identity may be a C-RNTI of the child node, or may be a value of one or more bits (bits) in the C-RNTI, or the contention resolution identity may be any value. This is not limited in this application. The child node may stop the timer after parsing the MAC CE carrying the contention resolution identity.

In a possible implementation, a cell radio network temporary identifier C-RNTI used before the child node receives the first RRC reconfiguration message may be the same as a cell radio network temporary identifier C-RNTI used after the child node receives the first RRC reconfiguration message.

Optionally, the first RRC reconfiguration message does not include the cell radio network temporary identifier of the child node.

Alternatively, optionally, the first RRC reconfiguration message includes second indication information indicating that the cell radio network temporary identifier of the child node remains unchanged.

Alternatively, optionally, the first RRC reconfiguration message includes the cell radio network temporary identifier used before the child node receives the first RRC reconfiguration message.

In a possible implementation, the method may further include: The parent node receives third indication information from the access network device. The parent node then sends the first indication information to the child node in response to the third indication information.

Optionally, the third indication information includes an identifier of the child node. Because the parent node may have a plurality of child nodes, the third indication information includes the identifier of the child node, so that the parent node can know the specific child node to which the parent node sends the first indication information.

In a possible implementation, the access network device is a target access network device of the child node and the parent node in a group handover process. It may be understood that a group in group handover includes at least the child node and the parent node, and the group may further include one or more other nodes. In the group handover, the child node is always connected to the parent node, in other words, the parent node of the child node does not change.

In a possible implementation, the method further includes: After the parent node receives the first RRC reconfiguration message from the access network device or sends the first RRC reconfiguration message to the child node, the parent node receives a second RRC reconfiguration message from the access network device, and the parent node starts a timer.

After the parent node receives the second RRC reconfiguration message, the parent node may perform handover, and consequently stops transmission with the access network device. Therefore, the parent node first receives the first RRC reconfiguration message from the access network device or sends the first RRC reconfiguration message to the child node, and then the parent node receives the second RRC reconfiguration message. This can ensure that the parent node sends the first RRC reconfiguration message to the child node, and ensure handover performance of the child node.

Optionally, the method may further include: After the parent node receives the first RRC reconfiguration message from the access network device or sends the first RRC reconfiguration message to the child node, the parent node sends fourth indication information to a source access network device, so as to trigger the source access network device to send the second RRC reconfiguration message to the parent node, where the source access network device is a source access network device of the child node and the parent node in the group handover process.

It may be understood that the second RRC reconfiguration message may be first sent by the target access network device to the source access network device, and then sent by the source access network device to the parent node. The parent node sends the fourth indication information to the source access network device, so that it can be ensured that the parent node receives the second RRC reconfiguration message after the parent node receives the first RRC reconfiguration message from the access network device or sends the first RRC reconfiguration message to the child node.

In a possible implementation, the child node is a terminal or an IAB node, and the parent node is an IAB node.

In a possible implementation, the access network device may include a CU, and optionally, the access network device may further include a DU.

The second aspect of this application provides a communication method applied to an integrated access and backhaul IAB system. The method may be performed by a parent node, or may be performed by a chip in the parent node. The following uses an example in which the parent node performs the method for description. The method includes: The parent node receives a first RRC reconfiguration message from an access network device, where the first RRC reconfiguration message includes a random access-free indication. The parent node sends the first RRC reconfiguration message to a child node, to trigger the child node to start a timer. The parent node receives a first RRC reconfiguration complete message from the child node. The parent node sends the first RRC reconfiguration complete message to the access network device. The parent node sends first indication information to the child node, where the first indication information indicates to stop the timer.

In a possible implementation, the method further includes: The parent node receives second indication information from the access network device. The parent node sends the first indication information to the child node in response to the second indication information.

Optionally, the second indication information includes an identifier of the child node.

In a possible implementation, the first indication information is a first-type media access control control element MAC CE, or the first indication information is a MAC CE carrying a contention resolution identity.

In a possible implementation, a cell radio network temporary identifier C-RNTI used before the child node receives the first RRC reconfiguration message may be the same as a cell radio network temporary identifier C-RNTI used after the child node receives the first RRC reconfiguration message.

Optionally, the first RRC reconfiguration message does not include the cell radio network temporary identifier of the child node.

Alternatively, optionally, the first RRC reconfiguration message includes third indication information indicating that the cell radio network temporary identifier of the child node remains unchanged.

Alternatively, optionally, the first RRC reconfiguration message includes the cell radio network temporary identifier that is of the child node and that is used before the parent node sends the first RRC reconfiguration message to the child node.

In a possible implementation, the access network device is a target access network device of the child node in a group handover process.

In a possible implementation, the method further includes: After the parent node receives the first RRC reconfiguration message from the access network device or sends the first RRC reconfiguration message to the child node, the parent node receives a second RRC reconfiguration message from the access network device, and the parent node starts a timer.

Optionally, the method further includes: After the parent node receives the first RRC reconfiguration message from the access network device or sends the first RRC reconfiguration message to the child node, the parent node sends fourth indication information to a source access network device, so as to trigger the source access network device to send the second RRC reconfiguration message to the parent node, where the source access network device is a source access network device of the child node and the parent node in the group handover process.

In a possible implementation, the child node is a terminal or an IAB node, and the parent node is an IAB node.

In a possible implementation, the access network device may include a CU, and optionally, the access network device may further include a DU.

The third aspect of this application provides a communication method applied to an integrated access and backhaul IAB system. The method may be performed by an access network device, or may be performed by a chip in the access network device. The following uses an example in which the access network device performs the method for description. The method includes: The access network device sends a first radio resource control RRC reconfiguration message to a child node via a parent node, so as to trigger the child node to start a timer, where the first RRC reconfiguration message includes a random access-free indication. The access network device receives a first RRC reconfiguration complete message from the child node via the parent node. The access network device sends second indication information to the parent node, so as to trigger the parent node to send first indication information to the child node, where the first indication information indicates to stop the timer.

In a possible implementation, the second indication information includes an identifier of the child node.

In a possible implementation, the first indication information is a first-type media access control control element MAC CE, or the first indication information is a MAC CE carrying a contention resolution identity.

In a possible implementation, a cell radio network temporary identifier C-RNTI used before the child node receives the first RRC reconfiguration message may be the same as a cell radio network temporary identifier C-RNTI used after the child node receives the first RRC reconfiguration message.

Optionally, the first RRC reconfiguration message does not include the cell radio network temporary identifier of the child node.

Alternatively, optionally, the first RRC reconfiguration message includes third indication information indicating that the cell radio network temporary identifier of the child node remains unchanged.

Alternatively, optionally, the first RRC reconfiguration message includes the cell radio network temporary identifier that is of the child node and that is used before the access network device sends the first RRC reconfiguration complete message to the child node via the parent node.

In a possible implementation, the access network device is a target access network device of the child node in a group handover process.

Optionally, the method further includes: The target access network device receives a handover request message from a source access network device, where the handover request message includes one or more of the following: the cell radio network temporary identifier of the child node before handover, an identifier of a cell accessed by the child node before handover, and hierarchical information of the child node in a network topology, and the source access network device is a source access network device of the child node and the parent node in the group handover process.

Optionally, the method further includes: The target access network device determines duration of the timer based on the hierarchical information, where the first RRC reconfiguration message includes information about the duration of the timer.

The target access network device receives the hierarchical information of the child node in the network topology, and the target access network device may properly determine the duration of the timer based on the hierarchical information. For example, a node with a larger hop quantity of a wireless backhaul link between the node and a migrating IAB node has larger duration of the timer, and a node with a smaller hop quantity of a wireless backhaul link between the node and the migrating IAB node has smaller duration of the timer. This prevents a child node handover failure caused by improper setting of the duration of the timer.

This application provides the communication method applied to an integrated access and backhaul IAB system, so that the C-RNTI of the child node remains unchanged before and after the handover, a process of configuring the C-RNTI by the child node is reduced, power consumption of the child node is reduced, and power is saved.

With reference to the fourth aspect and the fifth aspect, the following describes the solutions provided in embodiments of this application. It should be noted that the fourth aspect and the fifth aspect describe the solutions from perspectives of different network elements, and content of the solutions may be mutually referenced and cited.

A fourth aspect of this application provides a communication method applied to an integrated access and backhaul IAB system. The method may be performed by a child node, or may be performed by a chip in the child node. The following uses an example in which the child node performs the method for description. The method includes: The child node receives a first radio resource control RRC reconfiguration message from an access network device via a parent node. The child node performs handover based on the first RRC reconfiguration message, where a cell radio network temporary identifier of the child node before handover is the same as a cell radio network temporary identifier after the handover.

The C-RNTI of the child node remains unchanged before and after the handover, a process of configuring the C-RNTI by the child node is reduced, power consumption of the child node is reduced, and power of the child node is saved.

In a possible implementation, the cell radio network temporary identifier C-RNTI used before the child node receives the first RRC reconfiguration message may be the same as the cell radio network temporary identifier C-RNTI used after the child node receives the first RRC reconfiguration message.

Optionally, the first RRC reconfiguration message does not include the cell radio network temporary identifier of the child node; the first RRC reconfiguration message includes first indication information indicating that the cell radio network temporary identifier of the child node remains unchanged; or the first RRC reconfiguration message includes the cell radio network temporary identifier used before the child node receives the first RRC reconfiguration message.

In a possible implementation, the first RRC reconfiguration message includes a random access-free indication.

In a possible implementation, the method in the fourth aspect may further include the method in the first aspect. For details, refer to content of the first method. For example, the method further includes: The child node starts a timer. The child node sends a first RRC reconfiguration complete message to the access network device via the parent node. The child node receives second indication information from the parent node, where the second indication information indicates to stop the timer. The child node stops the timer.

In a possible implementation, the child node is a terminal or an IAB node, and the parent node is an IAB node.

In a possible implementation, the access network device may include a CU, and optionally, the access network device may further include a DU.

A fifth aspect of this application provides a communication method applied to an integrated access and backhaul IAB system. The method may be performed by an access network device, or may be performed by a chip in the access network device. The following uses an example in which the access network device performs the method for description. The method includes: The access network device obtains a first radio resource control RRC reconfiguration message. The access network device sends the first RRC reconfiguration message to a child node via a parent node, where the first RRC reconfiguration message is used for handover of the child node, and a cell radio network temporary identifier before the handover of the child node is the same as a cell radio network temporary identifier after the handover.

In a possible implementation, the cell radio network temporary identifier C-RNTI used before the child node receives the first RRC reconfiguration message may be the same as the cell radio network temporary identifier C-RNTI used after the child node receives the first RRC reconfiguration message.

Optionally, the first RRC reconfiguration message does not include the cell radio network temporary identifier of the child node; the first RRC reconfiguration message includes first indication information indicating that the cell radio network temporary identifier of the child node remains unchanged; or the first RRC reconfiguration message includes the cell radio network temporary identifier used before the child node receives the first RRC reconfiguration message.

In a possible implementation, the first RRC reconfiguration message includes a random access-free indication.

In a possible implementation, the method in the fifth aspect may further include the method in the third aspect. For details, refer to the method in the third aspect. For example, the method according to the fifth aspect may further include: The access network device receives a first RRC reconfiguration complete message from the child node via the parent node. The access network device sends second indication information to the parent node, to trigger the parent node to send third indication information to the child node, where the third indication information indicates to stop the timer.

This application provides a solution, so that in a group handover process, it can be ensured that the parent node first receives the RRC reconfiguration message of the child node, and then receives an RRC reconfiguration message of the parent node, so as to avoid a case in which the parent node stops transmission with a source access network device after first receiving the RRC reconfiguration message of the parent node, and consequently, the parent node cannot receive the RRC reconfiguration message of the child node. Therefore, a handover function of the child node is ensured.

With reference to the sixth aspect and the seventh aspect, the following describes the solutions provided in embodiments of this application. It should be noted that the fourth aspect and the fifth aspect describe the solutions from perspectives of different network elements, and content of the solutions may be mutually referenced and cited.

A sixth aspect of this application provides a communication method applied to an integrated access and backhaul IAB system. The method may be performed by a parent node, or may be performed by a chip in the parent node. The following uses an example in which the parent node performs the method for description. The method includes: After the parent node receives a first RRC reconfiguration message from a source access network device or sends the first RRC reconfiguration message to a child node, the parent node receives a second RRC reconfiguration message from the source access network device.

In a possible implementation, the first RRC reconfiguration message is used to trigger the child node to start a timer, and the second RRC reconfiguration message is used to trigger the parent node to start the timer.

In a possible implementation, the source access network device may be a source access network device of the child node and the parent node in a group handover process.

Optionally, a group on which group handover is performed may include one or more other nodes.

In a possible implementation, the method further includes: After the parent node receives the first RRC reconfiguration message from the source access network device or sends the first RRC reconfiguration message to the child node, the parent node sends first indication information to the source access network device, and the source access network device sends the first RRC reconfiguration message to the parent node in response to the first indication information.

In a possible implementation, the method in the sixth aspect may include content of the method in the second aspect. For details, refer to content of the method in the second aspect.

A seventh aspect of this application provides a communication method applied to an integrated access and backhaul IAB system. The method may be performed by a source access network device, or may be performed by a chip in the source access network device. The following uses an example in which the source access network device performs the method for description. The method includes: After the source access network device sends a first RRC reconfiguration message to a parent node, the source access network device sends a second RRC reconfiguration message to the parent node.

In a possible implementation, the first RRC reconfiguration message is used for handover or RRC reconfiguration of the parent node, and may be referred to as an RRC reconfiguration message of the parent node. The second RRC reconfiguration message is used for handover or reconfiguration of a child node, and may be referred to as an RRC reconfiguration message of the child node.

In a possible implementation, the first RRC reconfiguration message is used to trigger the child node to start a timer, and the second RRC reconfiguration message is used to trigger the parent node to start the timer.

In a possible implementation, the source access network device may be a source access network device of the child node and the parent node in a group handover process.

Optionally, a group on which group handover is performed may include one or more other nodes.

In a possible implementation, the method further includes: After the source access network device sends the first RRC reconfiguration message to the parent node, the source access network device receives first indication information from the parent node. The source access network device sends the second RRC reconfiguration message to the parent node in response to the first indication information.

For content of the first RRC reconfiguration message and the second RRC reconfiguration message in the methods in the sixth aspect and the seventh aspect, refer to content in the first aspect to the fifth aspect.

This application provides a solution. In the group handover process, the source access network device may send a C-RNTI of one or more nodes in the group on which the group handover is performed, a cell identifier of an accessed cell of the one or more nodes, and/or hierarchical information of the one or more nodes in a network topology to a target access network device.

With reference to the eighth aspect and the ninth aspect, the following describes the solutions provided in embodiments of this application. It should be noted that the eighth aspect and the ninth aspect describe the solutions from perspectives of different network elements, and content of the solutions may be mutually referenced and cited.

An eighth aspect of this application provides a communication method applied to an integrated access and backhaul IAB system. The method may be performed by a source access network device, or may be performed by a chip in the source access network device. The following uses an example in which the source access network device performs the method for description. The method includes: The source access network device obtains a handover request message. The source access network device sends the handover request message to a target access network device, where the handover request message includes a C-RNTI of one or more nodes, a cell identifier of an accessed cell of the one or more nodes, and/or hierarchical information of the one or more nodes in a network topology.

The source access network device sends the C-RNTI of the one or more nodes to the target access network device, so that the target access network device includes the C-RNTI of each node in an RRC reconfiguration message and sends the RRC reconfiguration message to the node, so that the C-RNTI of the node may remain unchanged before and after handover, to reduce a process of configuring the C-RNTI and reduce power consumption of the node.

The source access network device sends, to the target access network device, the identifier of the cell accessed by the one or more nodes and the C-RNTI of the one or more nodes, so that the target access network device can uniquely identify the one or more nodes.

Optionally, the cell identifier of the accessed cell may include one or more of a physical cell identifier (physical cell identifier, PCI), an NR cell identity (NR Cell Identity, NCI), an NR cell global identifier (NR cell global identifier, NCGI), and an E-UTRAN cell global identifier (E-UTRAN cell global identifier, ECGI).

Optionally, the PCI of the cell before and after the handover may remain unchanged, and the NCGI and the ECGI may change.

The source access network device sends the hierarchical information of the one or more nodes in the network topology to the target access network device, so that the target access network device can properly determine duration of a timer based on the hierarchical information. For example, a node with a larger hop quantity of a wireless backhaul link between the node and a migrating IAB node has larger duration of the timer, and a node with a smaller hop quantity of a wireless backhaul link between the node and a migrating IAB node has smaller duration of the timer. This prevents a child node handover failure caused by improper setting of the duration of the timer.

In a possible implementation, the source access network device is a source access network device of the one or more nodes in a group handover process, and the target access network device is a target access network device of the one or more nodes in the group handover process.

In a possible implementation, the hierarchical information of the one or more nodes in the network topology is used to determine information about the duration of the timer of the one or more nodes.

In a possible implementation, the method further includes: The source access network device receives an RRC reconfiguration message of each of the one or more nodes from the target access network device. The source access network device sends the RRC reconfiguration message of each node to the node in the one or more nodes, where the RRC reconfiguration message of each node includes information about duration of a timer of the node. It may be understood that, that the source access network device sends the RRC reconfiguration message of each node to the node may specifically include: The source access network device first sends the RRC reconfiguration message of the node to a parent node of the node, and then the parent node sends the RRC reconfiguration message to the node.

In a possible implementation, the method in the eighth aspect may further include the method in the seventh aspect. It may be understood that the child node and the parent node in the seventh aspect may be the one or more nodes in the method in the eighth aspect.

A ninth aspect of this application provides a communication method applied to an integrated access and backhaul IAB system. The method may be performed by a target access network device, or may be performed by a chip in the target access network device. The following uses an example in which the target access network device performs the method for description. The method includes: The target access network device receives a handover request message from a source access network device, where the handover request message includes a C-RNTI of one or more nodes, a cell identifier of an accessed cell of the one or more nodes, and/or hierarchical information of the one or more nodes in a network topology.

In a possible implementation, the source access network device is a source access network device of the one or more nodes in a group handover process, and the target access network device is a target access network device of the one or more nodes in the group handover process.

In a possible implementation, the target access network device determines duration information of a timer of each of the one or more nodes based on the hierarchical information.

In a possible implementation, the method further includes: The target access network device obtains an RRC reconfiguration message of each of the one or more nodes. The target access network device sends the RRC reconfiguration message of each of the one or more nodes to the source access network device. The source access network device sends the RRC reconfiguration message of each node to the node in the one or more nodes, where the RRC reconfiguration message of each node includes information about duration of a timer of the node.

In a possible implementation, the method in the ninth aspect may further include the method in the third aspect. Details are not described herein again. For example, the method further includes: The target access network device receives the RRC reconfiguration message of each node. The target access network device sends indication information to a parent node of each node after receiving the RRC reconfiguration message of the node, so as to trigger the parent node to indicate the node to stop the timer.

In a possible implementation, the method in the ninth aspect may further include the method in the fifth aspect. Details are not described herein again. For example, a cell radio network temporary identifier of each node before and after handover remains unchanged.

A tenth aspect of this application provides a communication method applied to an integrated access and backhaul IAB system. The method may be performed by a target access network device, or may be performed by a chip in the target access network device. The following uses an example in which the target access network device performs the method for description. The method includes: The target access network device obtains a group handover command, where the group handover command includes one or more of the following: random access-free indication information, duration of a handover timer, and common configuration information of a serving cell. The target access network device broadcasts the group handover command.

In a possible implementation, the target access network device is a target access network device in a group handover process. A group on which group handover is performed may include one or more nodes. Correspondingly, the one or more nodes may obtain the group handover command.

Same information of each node is sent in a broadcast manner, so that air interface signaling overheads can be reduced. Particularly, in the IAB system, signaling overheads caused by separately sending signaling to a plurality of nodes in a group can be avoided in the foregoing broadcast manner.

In a possible implementation, the method in the tenth aspect may further include the method in the third aspect, the fifth aspect, and/or the ninth aspect. Details are not described herein again.

An eleventh aspect of this application provides a communication method that may be applied to a single-air-interface scenario. A terminal is handed over from a source access network device to a target access network device, and the target access network device includes a CU and a DU. The method may include: The CU sends first indication information to the DU, to trigger the DU to send second indication information to the terminal. The terminal stops a timer based on the second indication information.

In a possible implementation, before the CU sends the first indication information to the DU, the method may further include: The target CU sends a first RRC reconfiguration message to the terminal via the source access network device. The terminal starts the timer after receiving the first RRC reconfiguration message. The terminal sends a first RRC reconfiguration complete message to the DU. The DU sends the first RRC reconfiguration complete message to the CU.

Optionally, for the first indication information in the eleventh aspect, refer to content of the second indication information in the first aspect. For the second indication information in the eleventh aspect, refer to content of the first indication information in the first aspect. Details are not described herein again.

One or more methods in the first aspect to the eleventh aspect may be combined with each other, and in the method in each aspect, one or more of a plurality of possible implementations may be combined with each other.

A twelfth aspect of embodiments of this application provides a communication apparatus. The communication apparatus may be a child node or a chip in the child node; the communication apparatus may be a parent node or a chip in the parent node; the communication apparatus may be a source access network device or a chip in the source access network device; the communication apparatus may be a target access network device or a chip in the target access network device; the communication apparatus may be a CU or a chip in the CU; or the communication apparatus may be a DU or a chip in the DU. The communication apparatus includes a processor. The processor is configured to execute a computer program or instructions, so that the communication apparatus performs the method in the first aspect to the eleventh aspect.

Optionally, the communication apparatus further includes a memory. The processor is coupled to the memory, the memory is configured to store the computer program or the instructions, and the processor is configured to execute the computer program or the instructions in the memory.

Optionally, the communication apparatus may further include a communication unit. The communication unit is configured to communicate with another device or another component in the communication apparatus. For example, the communication apparatus is a child node or a parent node, and the communication unit is a transceiver. For example, the communication apparatus is an access network device, and the communication unit may include an interface between a transceiver and the access network device. The transceiver is used by the access network device to communicate with a child node of the access network device. The interface is used by the access network device to communicate with another access network device. For example, the communication apparatus is a CU, and the communication unit is an interface between the CU and a DU and an interface between the CU and another access network device. For example, the communication apparatus is a DU, and the communication unit is an interface between a CU and the DU and a transceiver of the DU.

For example, the communication apparatus is a chip, and the communication unit is an input/output circuit or an interface of the chip.

A ninth aspect of embodiments of this application provides a communication apparatus. The communication apparatus has a function of implementing behavior of the child node, the parent node, the source access network device, the target access network device, the CU of the source access network device or the target access network device, or the DU of the source access network device or the target access network device in the foregoing method aspects, and includes a component (means) corresponding to the steps or functions described in the methods in the first aspect to the eleventh aspect. The steps or the functions may be implemented by using software, hardware, or a combination of hardware and software.

A thirteenth aspect of embodiments of this application provides a chip. The chip includes a processor and an interface circuit. The interface circuit is coupled to the processor. The processor is configured to run a computer program or instructions, to implement the method according to any one of the first aspect to the eleventh aspect. The interface circuit is configured to communicate with a module other than the chip.

A fourteenth aspect of embodiments of this application provides a computer storage medium. The computer storage medium stores a program configured to implement the method in any one of the first aspect to the eleventh aspect. When the program is run in a wireless communication apparatus, the wireless communication apparatus is enabled to perform the method according to any one of the first aspect to the eleventh aspect.

A fifteenth aspect of embodiments of this application provides a computer program product. The program product includes a program. When the program is run, the method in any one of the first aspect to the seventh aspect is performed.

A sixteenth aspect of embodiments of this application provides a communication system, including one or more of the child node, the parent node, the source access network device, and the target access network device in the methods in the first aspect to the eleventh aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a schematic diagram of a mobile communication system 100 according to an embodiment of this application;
FIG. 2 is a schematic diagram of a CU-DU separation architecture according to an embodiment of this application;
FIG. 3 is a schematic diagram of an integrated access and backhaul (integrated access and backhaul, IAB) network according to an embodiment of this application;
FIG. 4A is a schematic diagram of a control plane protocol stack in a single air interface scenario according to an embodiment of this application;
FIG. 4B is a schematic diagram of a user plane protocol stack in a single air interface scenario according to an embodiment of this application;
FIG. 5A is a schematic diagram of a control plane protocol stack in an IAB network according to an embodiment of this application;
FIG. 5B is a schematic diagram of a user plane protocol stack in an IAB network according to an embodiment of this application;
FIG. 6 is a schematic diagram of group handover according to an embodiment of this application;
FIG. 7 shows a communication method according to an embodiment of this application;
FIG. 8A, FIG. 8B, and FIG. 8C show a group handover method according to an embodiment of this application;
FIG. 9 shows another communication method according to an embodiment of this application;
FIG. 10 is a schematic diagram of a structure of a terminal according to an embodiment of this application;
FIG. 11 is a schematic diagram of a structure of an access network device according to an embodiment of this application;
FIG. 12 is a schematic diagram of a structure of a communication apparatus according to an embodiment of this application; and
FIG. 13 is a schematic diagram of a structure of a communication apparatus according to an embodiment of this application.

### DESCRIPTION OF EMBODIMENTS

The following describes embodiments of this application with reference to the accompanying drawings in embodiments of this application.

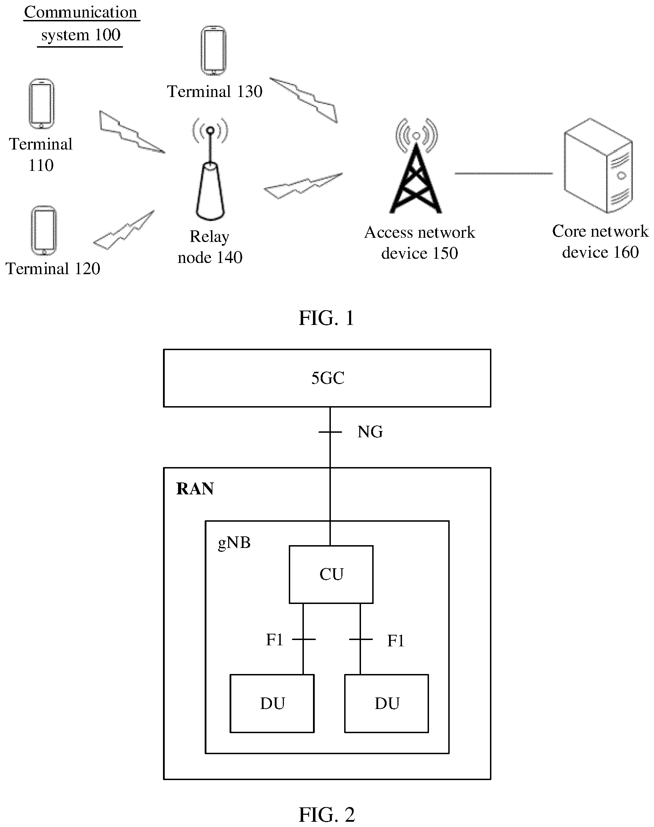

FIG. 1 is a schematic diagram of an architecture of a communication system 100 according to an embodiment of this application. The communication system 100 includes at least one terminal (for example, a terminal 110, a terminal 120, and a terminal 130), at least one relay node (relay node, RN) 140, at least one access network device 150, and at least one core network device 160.

The terminal may be connected to the at least one access network device, or the terminal may be connected to the at least one access network device via the at least one relay node, where the at least one access network device is connected to the at least one core network device. As shown in FIG. 1, both the terminal 110 and the terminal 120 are connected to the relay node 140, the relay node 140 is connected to the access network device 150, and the terminal 130 is connected to the access network device 150. The access network device 150 is connected to the core network device 160. The terminal 110, the terminal 120, the terminal 130, the relay node 140, the access network device 150, and the core network device 160 may be connected in a wireless or wired manner. This is not limited in this application.

The communication system provided in this application may be, for example, a long term evolution (long term evolution, LTE) system supporting a 4G access technology, a new radio (new radio, NR) system supporting a 5G access technology, any cellular system related to the 3rd generation partnership project (3rd generation partnership project, 3GPP), a wireless fidelity (wireless-fidelity, Wi-Fi) system, a worldwide interoperability for microwave access (worldwide interoperability for microwave access, WiMAX) system, a multiple radio access technology (Radio Access Technology, RAT) system, or another future-oriented communication technology. In this application, a terminal is a device having a wireless transceiver function, and the terminal may be deployed on the land, including an indoor or outdoor device, a hand-held device, or a vehicle-mounted device, or may be deployed on the water (for example, on a ship), or may be deployed in the air (for example, on a plane, a balloon, or a satellite). The terminal may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal may also be referred to as a terminal device, user equipment (user equipment, UE), an access terminal device, a station, a UE unit, a UE station, a mobile station, a remote station, a remote terminal device, a mobile device, a UE terminal device, a terminal device, a wireless communication device, a UE agent, a UE apparatus, or another suitable term. The terminal may be fixed or mobile.

An access network device may be a device configured to support a terminal in accessing a communication system on an access network side. The access network device may be referred to as a base station (base station, BS), for example, an evolved NodeB (evolved NodeB, eNB) in a 4G access technology communication system, a next generation NodeB (next generation NodeB, gNB) in a 5G access technology communication system, a transmission reception point (transmission reception point, TRP), a relay node (relay node), an access point (access point, AP), an access node in a Wi-Fi system, or a wireless backhaul node. Alternatively, the access network device may be referred to as a donor node, an IAB donor (IAB donor), a donor IAB, a donor, a donor gNB (donor gNB, DgNB), or the like. The base station may be a macro base station, a micro base station, a picocell base station, a small cell, a relay station, or the like. A plurality of base stations may support the foregoing networks using a same technology, or may support the foregoing networks using different technologies. The base station may include one or more co-site or non-co-site transmission/reception points (Transmission/reception points, TRPs). The access network device may alternatively be a radio controller, a central unit (central unit, CU), and/or a distributed unit (distributed unit, DU) in a cloud radio access network (cloud radio access network, CRAN) scenario. The access network device may alternatively be a server, a wearable device, a vehicle-mounted device, or the like. The following uses an example in which the access network device is a base station for description. A plurality of access network devices in the communication system may be base stations of a same type, or may be base stations of different types. The base station may communicate with the terminal, or may communicate with the terminal device via a relay station. The terminal may communicate with a plurality of base stations using different technologies. For example, the terminal device may communicate with a base station supporting an LTE network, may communicate with a base station supporting a 5G network, or may support dual connectivity to a base station in an LTE network and a base station in a 5G network.

A core network device may be connected to one or more access network devices, and may provide one or more functions of session management, access authentication, internet protocol (Internet Protocol, IP) address allocation, and data transmission for a terminal in a system. For example, the core network device may be a mobility management entity (mobility management entity, MME) or a serving gateway (serving gateway, SGW) in a 4G access technology communication system, or an access and mobility management function (Access and Mobility Management Function, AMF) network element or a user plane function (User Plane Function, UPF) network element in a 5G access technology communication system. The core network device may also be referred to as a core network element.

A relay node may be a node that provides a wireless access service and/or a wireless backhaul service. The wireless access service means providing data and/or signaling through a wireless access link, and the wireless backhaul service refers to a data and/or signaling backhaul service provided through a wireless backhaul link. The relay node is configured to forward data and/or signaling between a terminal and an access network device. The relay node provides the wireless access service for the terminal through an access link (access link, AL). In addition, the relay node is connected to the access network device through a one-hop or multi-hop backhaul link (backhaul link, BL).

The relay node may have different names in different communication systems. For example, the relay node may be referred to as a wireless backhaul node or a wireless backhaul device. For example, in a 5G system, the relay node may be referred to as an integrated access and backhaul node (integrated access and backhaul node, IAB node). Certainly, in a future communication system, the relay node may further have different names. This is not limited herein.

Optionally, the relay node may alternatively be a terminal device. Alternatively, the relay node may also be a CPE in a home access scenario. For example, the IAB node may be a device such as customer premises equipment (customer premises equipment, CPE) or a residential gateway (residential gateway, RG). In this case, the method provided in embodiments of this application may further be applied to a home access (home access) scenario.

FIG. 2 is a schematic diagram of a CU-DU separation architecture according to an embodiment of this application. The access network device 150 in FIG. 1 may use the CU-DU separation architecture. In FIG. 2, an example in which the access network device is a next-generation NodeB (next-generation NodeB, gNB) is used for description.

The gNB may be implemented in a cloud radio access network (cloud radio access network, C-RAN) architecture. Some functions of the gNB are implemented by a central unit (central unit, CU), and the other functions are implemented by a distributed unit (distributed unit, DU). CU-DU division may be performed by protocol stacks. In a possible manner, a radio resource control (radio resource control, RRC) layer, a service data mapping protocol stack (service data adaptation protocol, SDAP) layer, and a packet data convergence protocol (packet data convergence protocol, PDCP) layer are deployed in the CU, and a radio link control (radio link control, RLC) layer, a media access control (media access control, MAC) layer, and a physical (physical, PHY) layer are deployed in the DU.

One CU may be connected to one or more DUs, to facilitate network extension. The CU and the DU are connected through an interface (for example, an F1 interface), and the CU and a core network (for example, a 5G core network (5G core network, 5GC)) are connected through an interface (for example, an NG interface).

In an implementation, the CU includes a user plane (User plane, UP for short) (CU-UP for short in this application) and a control plane (Control plane, CP for short) (CU-CP for short in this application).

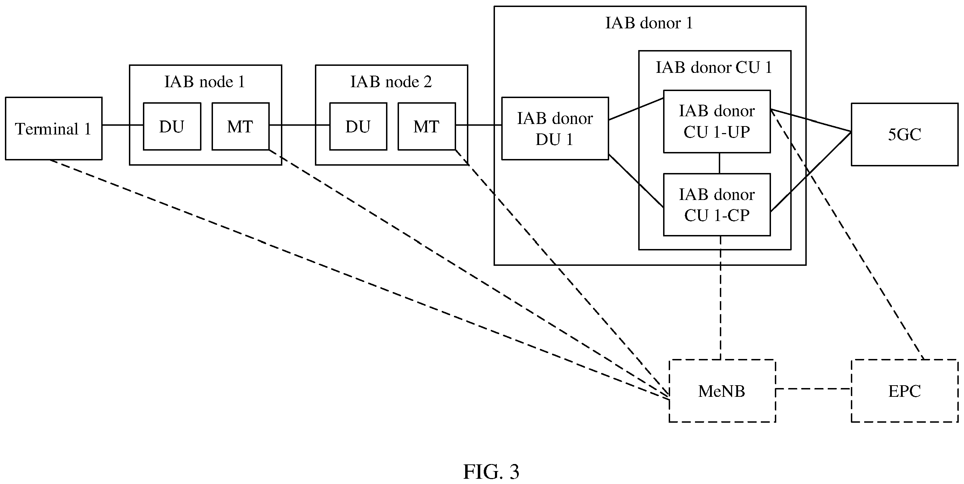

FIG. 3 is a schematic diagram of an integrated access and backhaul (integrated access and backhaul, IAB) network according to an embodiment of this application. FIG. 3 is an application scenario of the communication system 100 shown in FIG. 1. With reference to FIG. 3, the following further describes the terminal, the relay node, and the access network device in FIG. 1.

The IAB network includes one or more terminals (for clarity, FIG. 3 shows only a terminal 1), one or more IAB nodes (for clarity, FIG. 2 shows two IAB nodes: an IAB node 1 and an IAB node 2), and one or more donor nodes (for clarity, FIG. 2 shows only an IAB donor 1).

The terminal 1 may be connected to the one or more IAB nodes, each IAB node may be connected to one or more other IAB nodes, and the one or more IAB nodes may be connected to the one or more donor nodes. Optionally, the one or more IAB nodes may be alternatively connected to each other. This is not limited in this application.

An IAB donor may be referred to as a donor node (donor node), a donor gNodeB (DgNB), or another proper name. This is not limited in this application.

In FIG. 3, the terminal 1 may be the terminal 110 in FIG. 1. The IAB node (node) 1 and the IAB node 2 may be the relay node 140 in FIG. 1. The IAB donor 1 may be the access network device 150 in FIG. 1. A 5G core network (5G Core Network, 5GC) and an evolved packet core network (evolved packet core, EPC) may be core networks including at least one core network device shown in FIG. 1.

The IAB donor 1 in FIG. 3 may be the gNB in FIG. 2, and the IAB donor 1 may use the CU-DU separation architecture in FIG. 2. To be specific, the IAB donor 1 may include a central unit (which may be referred to as an IAB donor CU 1) and a distributed unit (which may be referred to as an IAB donor DU 1), and the IAB donor CU 1 may include a CP (which may be referred to as an IAB donor CU 1-CP) and a UP (which may be referred to as an IAB donor CU 1-UP). For details, refer to content in FIG. 2.

The IAB network supports a networking mode of standalone (standalone, SA) or non-standalone (non-standalone, NSA).

For example, in the SA networking mode in FIG. 3, the IAB donor 1 may be connected to the 5GC. Specifically, the IAB donor CU 1-CP may be connected to a control plane network element in the 5GC, for example, an access and mobility management function (access and mobility management function, AMF), and the IAB donor CU 1-UP may be connected to a user plane network element in the 5GC, for example, a user plane function (user plane function, UPF).

For example, in the NSA networking mode in FIG. 3, the IAB donor 1 serves as a secondary gNB (secondary gNB, SgNB), and establishes dual connectivity to a master eNB (master eNB, MeNB). Both the IAB node 1 and the IAB node 2 are connected to the MeNB, the IAB donor CU 1-CP is connected to the MeNB, the MeNB is connected to the EPC, and the IAB donor CU 1-UP is connected to a network element in the EPC, for example, a service gateway (serving gateway, SGW).

It may be understood that, in the IAB network, one transmission path between the terminal and the donor node may include one or more IAB nodes. If one IAB node is a node accessed by the terminal, a link between the IAB node and a child node (namely, the terminal) may be referred to as an access link. If one IAB node is a node that provides a backhaul service for a terminal accessing another IAB node, a link between the IAB node and a child node (namely, the another IAB node) may be referred to as a backhaul link. For example, as shown in FIG. 3, the terminal 1 is connected to the IAB node 1 through a wireless access link, the IAB node 1 is connected to the IAB node 2 through a wireless backhaul link, and the IAB node 2 is connected to the IAB donor 1 through a wireless backhaul link.

To ensure service transmission reliability, optionally, in the IAB network, multi-hop IAB node networking and multi-connectivity IAB node networking are supported. There may be a plurality of transmission paths between the terminal and the IAB donor. On a path, there is a determined hierarchical relationship between IAB nodes, and between an IAB node and a donor node serving the IAB node. Each IAB node or terminal considers, as a parent node, a node providing an access service for the IAB node or terminal. Correspondingly, each IAB node or terminal may be considered as a child node of the parent node of the IAB node or terminal.

In addition, in embodiments of this application, a parent node of a parent node of an IAB node is referred to as a grandparent node of the IAB node, and a child node of a child node of the IAB node is considered as a grandchild node of the IAB node.

It may be understood that a parent node and a child node are relative concepts. A node may be a child node of one node, and may be a parent node of another node. For example, in FIG. 3, the IAB node 1 is a parent node of the terminal 1, and the terminal 1 is a child node of the IAB node 1. The IAB node 2 is a parent node of the IAB node 1, and the IAB node 1 is a child node of the IAB node 2. The IAB donor 1 (which may be specifically an IAB donor DU) is a parent node of the IAB node 2, and the IAB node 2 is a child node of the IAB donor 1 (which may be specifically the IAB donor DU).

An uplink data packet of the terminal may be transmitted to the donor node via the one or more IAB nodes, and then sent by the donor node to a core network device, for example, a mobile gateway device (for example, a user plane function (user plane function, UPF for short) network element in a 5G network). A downlink data packet of the terminal is received by the donor node from the core network device (mobile gateway device), and then sent to the terminal via the one or more IAB nodes.

For example, in FIG. 3, a transmission path of an uplink data packet between the terminal 1 and the IAB donor 1 is: terminal 1-IAB node 1→IAB node 2→IAB donor 1, and a transmission path of a downlink data packet between the terminal 1 and the IAB donor 1 is: IAB donor 1→IAB node 2→IAB node 1 -terminal 1.

In the IAB network, on a transmission path, an IAB node accessed by the terminal may be referred to as an access IAB node, and another IAB node on the transmission path is referred to as an intermediate IAB node. The intermediate IAB node may provide a backhaul service for the terminal. An IAB node may serve as an access IAB node of a terminal, or may serve as an intermediate IAB node of another terminal.

For example, in FIG. 3, on the path "terminal 1→IAB node 1→IAB node 2→IAB donor 1", the IAB node 1 is an access IAB node, and the IAB node 2 is an intermediate IAB node. If a terminal 2 (not shown in FIG. 2) accesses an IAB node 3 (not shown in FIG. 3), and the IAB node 3 accesses the IAB node 1, for the terminal 2, the IAB node 3 is an access IAB node, and the IAB node 1 is an intermediate IAB node.

In the IAB network, one or more IAB nodes and one or more terminals served by an IAB node may be referred to as a descendant (descendant) node of the IAB node. It may be understood that the descendant node may include the IAB node served by the IAB node, or it may be understood that the descendant node includes a subordinate IAB node connected to the IAB node through at least one-hop link. For example, the descendant node includes a child node and a grandchild node, and terminals accessing these IAB nodes, for example, terminals accessing the child node and the grandchild node.

For example, in FIG. 3, a descendant node of the IAB node 2 includes the terminal 1 and the IAB node 1.

The foregoing IAB network is merely an example. In an IAB network with multi-hop and multi-connectivity, there are more other possibilities in the IAB network. For example, a donor node and an IAB node accessing another donor node form dual connectivity to serve a terminal. The possibilities are not listed one by one herein.

In the IAB network, when serving as a parent node, an IAB node may play a role similar to that of an access network device, to provide an access service for a child node of the IAB node. For example, the IAB node may allocate, to the child node of the IAB node through scheduling, an uplink resource for transmitting uplink data. When the IAB node serves as a child node, a parent node that provides a service for the IAB node may play a role of a terminal device. For example, the IAB node establishes a connection to the parent node by performing operations such as cell selection and random access, to obtain an uplink resource that is scheduled by the parent node for the IAB node and that is for transmitting uplink data.

By way of example, and not limitation, in embodiments of this application, a functional unit that is in the IAB node and that supports the IAB node in playing the role of the terminal device is referred to as a mobile terminal (mobile terminal, MT) functional unit of the IAB node, and is an IAB-MT or IAB-UE for short; and a functional unit that is in the IAB node and that supports the IAB node in playing the role of the access network device is referred to as a DU functional unit of the IAB node, and is an IAB-DU for short. The IAB-MT and the IAB-DU may be logical functional units, and functions of the IAB-MT and the IAB-DU are both implemented by the IAB node. Alternatively, the IAB-MT and the IAB-DU may be physically divided, and the IAB-MT and the IAB-DU may be different physical devices in the IAB node.

For example, in FIG. 3, the IAB node 1 includes an MT functional unit and a DU functional unit, and the IAB node 2 includes an MT functional unit and a DU functional unit.

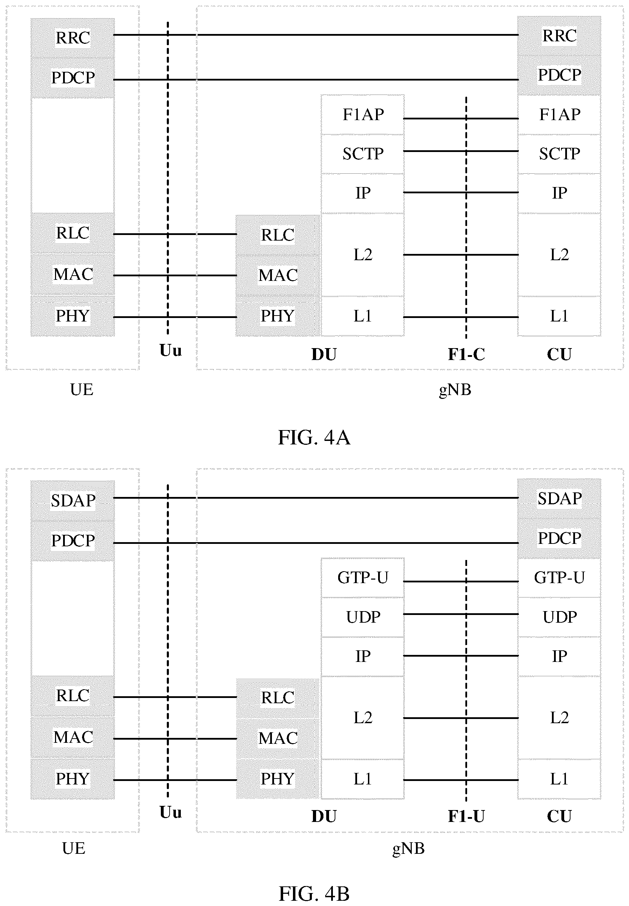

FIG. 4A is a schematic diagram of a control plane protocol stack in a single air interface scenario according to an embodiment of this application, and FIG. 4B is a schematic diagram of a user plane protocol stack in a single air interface scenario according to an embodiment of this application.

The single air interface scenario may be understood as follows: A terminal is directly connected to an access network device, and does not need to be connected to the access network device via a relay node. UE in FIG. 4A and FIG. 4B may be the terminal 130 in FIG. 1, and a gNB in FIG. 4A and FIG. 4B may be the access network device 150 in FIG. 1, and may use the CU-DU separation architecture shown in FIG. 2.

In the single-air-interface scenario, the UE may access a CU via a DU. Functions of peers of an RLC layer, a MAC layer, and a PHY layer that are of the UE are implemented by the DU, and functions of peers of an RRC layer, an SDAP layer, and a PDCP layer that are of the UE can be implemented by the CU.

For a control plane, as shown in FIG. 4A, peers of the RRC layer and the PDCP layer that are of the UE are established in the CU. The UE and the DU are connected through an interface (for example, a Uu interface), and peers of the RLC layer, the MAC layer, and the PHY layer that are of the UE are established in the DU. The DU and the CU are connected through a control plane interface (for example, an F1-control plane interface, F1-C interface), and peers of an F1 application protocol (F1 application protocol, F1AP) layer, a stream control transmission protocol (stream control transmission protocol, SCTP) layer, an internet protocol (Internet Protocol, IP) layer, a layer (layer, L) 2, and a layer (layers, L) 1 that are of the DU are established in the CU.

For a user plane, as shown in FIG. 4B, peers of the SDAP layer and the PDCP layer that are of the UE are established in the CU. The UE and the DU are connected through a Uu interface, and peers of the RLC layer, the MAC layer, and the PHY layer that are of the UE are established in the DU. The DU and the CU are connected through an F1-user plane (F1-user plane, F1-U) interface, and peers of a general packet radio service (general packet radio service, GPRS) tunneling protocol-user plane (GPRS tunneling protocol-user plane, GTP-U) layer, a user datagram protocol (user datagram protocol, UDP) layer, an IP layer, an L2, and an L1 that are of the DU are established in the cu.

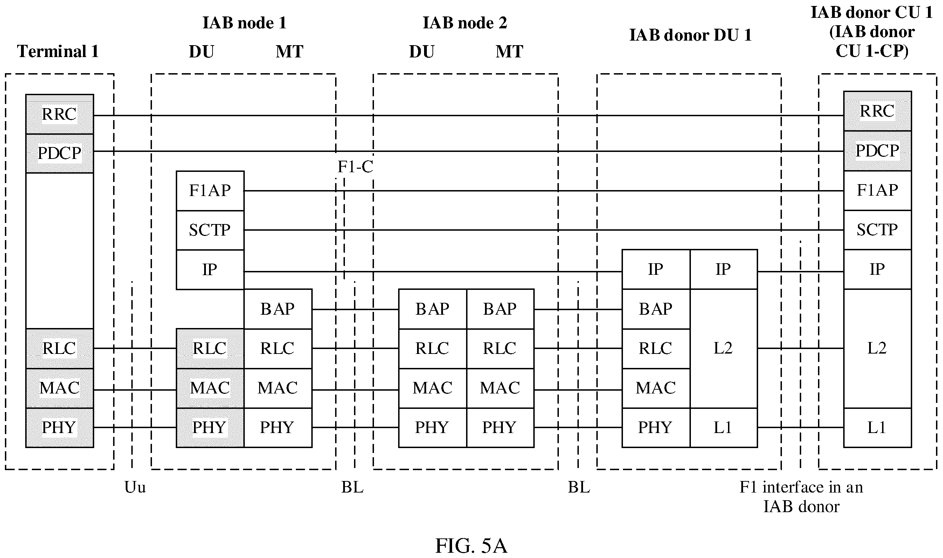

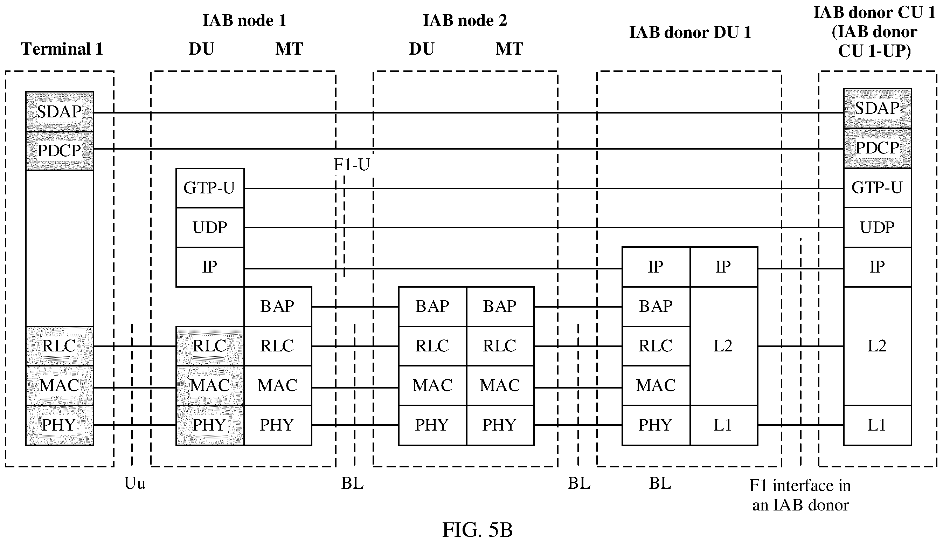

FIG. 5A is a schematic diagram of a control plane protocol stack in an IAB network according to an embodiment of this application, and FIG. 5B is a schematic diagram of a user plane protocol stack in an IAB network according to an embodiment of this application. FIG. 5A and FIG. 5B are described by using the scenario in FIG. 3 as an example.

In the IAB network, peers of a PHY layer, a MAC layer, and an RLC layer that are of a terminal are located on an access IAB node, and peers of a PDCP layer, an SDAP layer, and an RRC layer that are of the UE are located on an IAB donor CU. If the IAB donor CU includes a CP and a UP, a peer of the RRC layer of the UE is located on the CP (namely, a donor-CU-CP) of the IAB donor CU, and peers of the PDCP layer and the SDAP layer that are of the UE are located on the UP (namely, a donor-CU-UP) of the IAB donor CU.

For a control plane, as shown in FIG. 5A, a Uu interface is established between a terminal 1 and a DU of an IAB node 1, and protocol layers that have peers include an RLC layer, a MAC layer, and a PHY layer. An F1-C interface is established between the DU of the IAB node 1 and an IAB donor CU 1, and protocol layers that have peers include an F1AP layer, an SCTP layer, and an IP layer. An F1 interface in an IAB donor is established between an IAB donor DU 1 and the IAB donor CU 1, and protocol layers that have peers include an IP layer, an L2, and an L1. A BL is established between the IAB node 1 and an IAB node 2, and between the IAB node 2 and the IAB donor DU 1, and protocol layers that have peers include a backhaul adaptation protocol (Backhaul Adaptation Protocol, BAP) layer, an RLC layer, a MAC layer, and a PHY layer. In addition, peers of an RRC layer and a PDCP layer that are of the terminal 1 are established in the IAB donor CU 1, and a peer of an IP layer of the DU of the IAB node 1 is established in the IAB donor DU 1.

In embodiments of this application, the BAP layer has one or more of the following capabilities: adding, to a data packet, routing information (routing information) that can be identified by a wireless backhaul node (an IAB node), performing route selection based on the routing information that can be identified by the wireless backhaul node, adding, to the data packet, identification information that is related to a quality of service (quality of service, QoS) requirement and that can be identified by the wireless backhaul node, performing, for the data packet, QoS mapping on a plurality of links including the wireless backhaul node, adding data packet type indication information to the data packet, and sending flow control feedback information to a node that has a flow control capability. It should be noted that a protocol layer having these capabilities is not necessarily named as the BAP layer, and may also have another name. A person skilled in the art may understand that any protocol layer having these capabilities may be understood as the BAP layer in embodiments of this application.

It can be learned that, compared with a control plane protocol stack in the single air interface scenario, in the control plane protocol stack in the IAB network, a DU of the access IAB node implements functions of a DU of a gNB in the single air interface scenario, namely, functions of establishing the peers of the RLC layer, the MAC layer, and the PHY layer that are of the terminal and establishing the peers of the FLAP layer, the SCTP layer, and the IP layer that are of the CU. The IAB donor CU implements functions of a CU of the gNB in the single air interface scenario.

For a user plane, as shown in FIG. 5B, a Uu interface is established between a terminal 1 and a DU of an IAB node 1, and protocol layers that have peers include an RLC layer, a MAC layer, and a PHY layer. An F1-U interface is established between the DU of the IAB node 1 and an IAB donor CU 1, and protocol layers that have peers include a GTP-U layer, a UDP layer, and an IP layer. An F1 interface in an IAB donor is established between an IAB donor DU 1 and the IAB donor CU 1, and protocol layers that have peers include an IP layer, an L2, and an L1. A BL is established between the IAB node 1 and an IAB node 2, and between the IAB node 2 and the IAB donor DU 1, and protocol layers that have peers include a BAP layer, an RLC layer, a MAC layer, and a PHY layer. In addition, peers of an SDAP layer and a PDCP layer that are of the terminal 1 are established in the IAB donor CU 1, and a peer of an IP layer of the DU of the IAB node 1 is established in the IAB donor DU 1.

It can be learned that, compared with a user plane protocol stack in the single air interface scenario, in the user plane protocol stack in the IAB network, a DU of the access IAB node implements partial functions of a DU of a gNB in the single air interface scenario, namely, functions of establishing the peers of the RLC layer, the MAC layer, and the PHY layer that are of the terminal and establishing the peers of the GTP-U layer, the UDP layer, and the IP layer that are of the IAB donor CU 1. The IAB donor CU implements functions of a CU of the gNB in the single air interface scenario.

FIG. 5A and FIG. 5B are described by using only the protocol stack in the IAB scenario shown in FIG. 3 as an example. It should be noted that one IAB node may play one or more roles. The IAB node may have a protocol stack of the one or more roles. Alternatively, the IAB node may have a set of protocol stacks, and for different roles of the IAB node, protocol layers corresponding to different roles in the protocol stacks may be used to perform processing. The following uses an example in which the IAB node has the protocol stack of the one or more roles for description.

### (1) Protocol stack of a terminal

When starting to access an IAB network or after accessing the IAB network, the IAB node may play a role of a terminal. An MT of the IAB node has a protocol stack of the terminal, for example, a protocol stack of the terminal 1 in FIG. 5A and FIG. 5B. The IAB node may transmit an uplink and/or downlink data packet (for example, an OAM data packet) of the IAB node to an IAB donor, perform measurement via an RRC layer, and the like.

### (2) Protocol stack of an access IAB node

After accessing an IAB network, the IAB node may provide an access service for a terminal, to play a role of an access IAB node. In this case, the IAB node has a protocol stack of the access IAB node, for example, the protocol stack of the IAB node 1 in FIG. 5A and FIG. 5B.

### (3) Protocol stack of an intermediate IAB node

After accessing an IAB network, the IAB node may play a role of an intermediate IAB node. In this case, the IAB node has a protocol stack of the intermediate IAB node, for example, the protocol stack of the IAB node 2 in FIG. 5A and FIG. 5B.

The IAB node may have the protocol stack of one or more of the terminal, the access IAB node, and the intermediate IAB node.

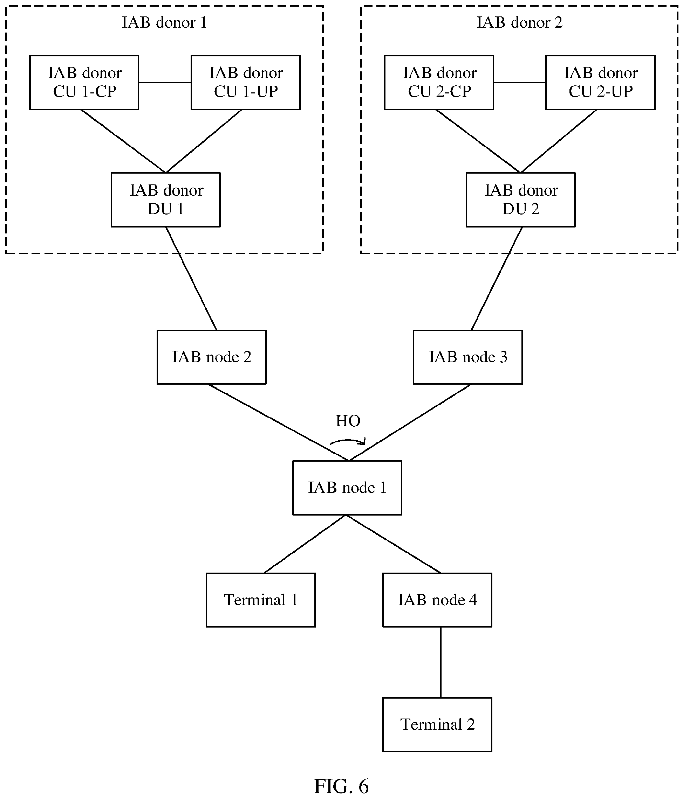

FIG. 6 is a schematic diagram of group handover according to an embodiment of this application. The following provides descriptions with reference to FIG. 6.

In FIG. 6, an IAB node 1 may provide an access and/or backhaul service for one or more terminals and/or another IAB node. For ease of description, the one or more terminals and/or the another IAB node may be referred to as a descendant node or a subordinate node. For clarity, FIG. 6 shows a case in which the IAB node 1 is connected to a terminal 1 and an IAB node 4, and an IAB node 3 is connected to a terminal 2. The IAB node 1 provides an access service for the terminal 1 and the IAB node 4, the IAB node 4 provides an access service for the terminal 2, and the IAB node 1 provides a backhaul service for the terminal 2. It should be noted that in an actual network deployment scenario, the IAB node 1 may further have one or more grandchild nodes, and the IAB node 4 may provide access and/or backhaul services for more terminals or IAB nodes. This is not limited in this embodiment of this application.

The IAB node 1 may be handed over due to link quality change, load change, or the like. The IAB node 1 is handed over from an IAB node 2 to the IAB node 3 (in other words, the IAB node 1 is handed over from a cell served by the IAB node 2 to a cell served by the IAB node 3), the IAB node 2 is connected to an IAB donor 1, and the IAB node 3 is connected to an IAB donor 2.

Because an IAB donor connected to the IAB node 1 before the handover and after the handover changes, the handover of the IAB node 1 may be referred to as cross-donor node handover.

First, the IAB node 1 may play a role of a terminal and be handed over from the IAB node 2 to the IAB node 3. In addition, because the IAB node 1 further serves descendant nodes, these descendant nodes may change, along with the IAB node 1, from connecting to the IAB node 2 to connecting to the IAB node 3. Because a donor node of the descendant nodes also changes, it may be considered that the descendant nodes are also handed over. The IAB node 1 and the descendant nodes may be referred to as a group, and handover of the IAB node 1 and the descendant nodes is referred to as group handover or group handover.

A group on which group handover is performed may include one or more IAB nodes. For ease of description, in embodiments of this application, a node whose parent node changes in group handover is referred to as a migrating (migrating) IAB node or a migrating node, a parent node of the migrating IAB node before group handover is a source parent node, and a parent node of the migrating IAB node after group handover is a target parent node. For example, in FIG. 6, the IAB node 1 may be referred to as a migrating IAB node, the IAB node 2 may be referred to as a source parent node of the IAB node 1, and the IAB node 3 may be referred to as a target parent node of the IAB node 1.

The IAB donor 1 may be referred to as a source IAB donor of group handover, a source IAB donor of one or more nodes in a group, or a source IAB donor of one or more nodes in a group in a group handover process. Similarly, the IAB donor 2 may be referred to as a target IAB donor of group handover, a target IAB donor of one or more nodes in a group, or a target IAB donor of one or more nodes in a group in a group handover process.

The group handover process may be understood as a process in which group handover is performed, and may include a process from determining, by the source IAB donor, that handover is to be performed to performing handover on the one or more nodes in the group. The one or more nodes in the group may be successfully handed over or fail to be handed over. This is not limited in embodiments of this application.

In this application, the source IAB donor may be referred to as a source donor node or a source access network device, and the target IAB donor may be referred to as a target donor node or a target access network device. This is not limited in embodiments of this application.

During group handover, because an access network device connected to each node changes, each node in the group needs to perform a handover procedure, and re-initiate random access in a new cell after the handover. Re-initiating random access by each node in the group causes impact on limited random access resources, and a large amount of signaling in a random access procedure causes a signaling storm. To resolve this problem, it is considered that, in the group, except the migrating IAB node, all descendant nodes of the migrating IAB node are handed over together with the migrating IAB node, a parent node of each descendant node may not change, and a serving cell that is of the parent node and that is accessed by each descendant node may not change (where an identifier of the cell may change or may not change, for example, an NCGI or ECGI of the cell may change, and a physical cell identifier PCI of the cell may not change). Therefore, this may be considered as that the descendant nodes of the migrating IAB node in the group do not need to perform random access in a handover process (in other words, random access-free handover is performed on the descendant nodes). However, the random access-free handover may cause a case in which the node is uncertain about when the handover succeeds, and consequently, a timer used to detect whether the handover succeeds cannot be stopped in a timely manner. Timeout of the timer causes a handover failure, and the node may initiate a process such as RRC reestablishment, causing an unnecessary delay. To resolve this problem, this application provides a solution. According to this solution, a node on which random access-free handover is performed and that is in a group can receive indication information and stop a timer in a timely manner based on the indication information, thereby improving a handover success rate, reducing a handover delay, and ensuring communication performance after the handover.

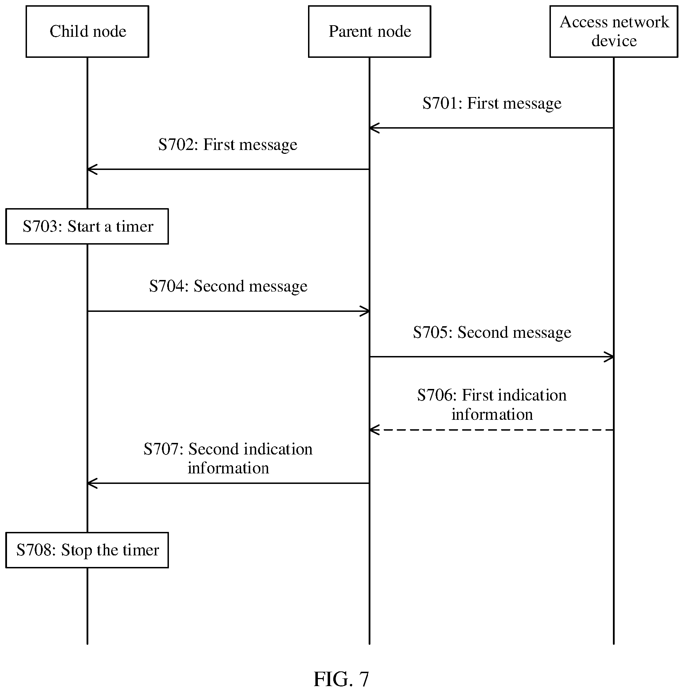

FIG. 7 shows a communication method according to an embodiment of this application. The communication method may be applied to relay systems such as an IAB system.

Optionally, in a relay system in FIG. 7, group handover may occur. To be specific, a group is handed over from a source access network device to a target access network device. A group on which group handover is performed includes at least a child node and a parent node. It may be understood that, in a group handover process, the parent node of the child node does not change. Optionally, the group may further include one or more other IAB nodes. For example, a migrating IAB node in the group may be the parent node, and the group may further include a descendant node of the parent node other than the child node. Alternatively, a migrating IAB node in the group may be a node between the parent node and the source access network device, and the group may further include a descendant node of the node other than the parent node and the child node.

Optionally, the child node may be an IAB node or a terminal, the parent node may be an IAB node, an upper-level node of the parent node may be an IAB node, the source access network device may be a source IAB donor, and the target access network device may be a target IAB donor.

FIG. 6 is used as an example. The group on which group handover is performed includes an IAB node 1, a terminal 1, an IAB node 4, and a terminal 2. The child node is the terminal 1 or the IAB node 4, and the parent node is the IAB node 1; or the child node is the terminal 2, the parent node is the IAB node 4, the source access network device is an IAB donor 1, and the target access network device is an IAB donor 2.

As shown in FIG. 7, the method includes the following steps.

S701: An access network device sends a first message to the parent node.

The access network device may be the target access network device of the parent node and the child node of the parent node in the group handover process.

Optionally, the parent node may be referred to as a first node, and the child node may be referred to as a second node. Optionally, there may be one or more other nodes between the second node and the access network device. For ease of description, the following uses the child node and the parent node for description.

In a possible implementation, S701 may include: The target access network device sends the first message to the source access network device, and the source access network device sends the first message to the parent node.

It may be understood that, the source access network device may be the source access network device of the parent node and the child node of the parent node in the group handover process.

It may be understood that there may be one or more other nodes between the source access network device and the parent node, and the source access network device may send the first message to the parent node via the one or more other nodes.

Optionally, the first message sent by the target access network device to the source access network device may be included in a handover request response message, and the first message sent by the source access network device to the parent node may be included in an FLAP message (for example, a UE context modification request message).

S702: The parent node sends the first message to the child node.

Optionally, S701 and S702 may be expressed as follows: The access network device sends the first message to the child node via the parent node, or the child node receives the first message from the access network device via the parent node.

Optionally, after receiving the first message, the child node may perform random access-free handover. In embodiments of this application, handover may also be referred to as RRC reconfiguration, master cell group (master cell group, MCG) change (change), or secondary cell group (secondary cell group, SCG) change.

Optionally, the description "before the child node receives the first message" may be referred to as before handover.

Optionally, the first message may be a first RRC reconfiguration message. An RRC reconfiguration message in this application may be referred to as a handover command message.

Optionally, the first message may not include random access configuration information.

Optionally, the first message may indicate that the child node does not perform random access, and the indication may be explicit or implicit.

For example, the indication is explicit. The first message may include a random access-free indication, and the child node does not perform random access based on the indication.

For another example, the indication is implicit. The first message may not include a random access-free indication. The child node and the target access network device may agree that the child node does not perform random access when the child node receives the first message. Alternatively, the child node and the target access network device may agree that the child node does not perform random access when the first message does not include the random access configuration information. Alternatively, another manner is used for indication during implementation. This is not limited in embodiments of this application.

Optionally, the first message may include a reconfiguration with sync (reconfigurationwithsync) information element.

Optionally, the foregoing random access-free indication may be carried in the reconfiguration with sync information element.

Optionally, the reconfiguration with sync information element does not include the random access configuration information.

Optionally, the child node may determine, via the reconfiguration with sync information element, that the child node needs to be handed over, and does not perform random access during the handover.

Because group handover is performed on the child node along with the parent node, the child node and the parent node do not need to be resynchronized. In an IAB network, a parent node may have one or more child nodes. The child node does not need to perform random access in a cell of the parent node, so that a quantity of times of initiating random access by the child node can be greatly reduced. Therefore, a delay caused by the handover can be reduced. In addition, a case in which random access resources are limited when a large quantity of child nodes initiate random access can be avoided.

Optionally, a cell radio network temporary identifier (cell radio network temporary identifier, C-RNTI) of the child node before and after the handover may remain unchanged.

Optionally, the C-RNTI uniquely identifies the child node in the cell of the parent node, or may be understood as an identifier of the child node in the accessed cell of the parent node. A name of the C-RNTI is not limited in embodiments of this application. The C-RNTI in this application may be replaced with another identifier identifying the child node in the cell.

In an implementation, the first message may not include the C-RNTI of the child node.

In this manner, the first message does not include the C-RNTI of the child node. After receiving the first message, the child node may continue to use, by default, the C-RNTI used before the child node receives the first message.

In another implementation, the first message may include indication information indicating that the C-RNTI of the child node remains unchanged.

In this manner, the child node may determine, based on the indication information, that the C-RNTI of the child node remains unchanged. Therefore, after receiving the first message, the child node continues to use the C-RNTI used before the child node receives the first message.

In still another implementation, the first message may include the C-RNTI used before the child node receives the first message.

In this manner, the child node may use the C-RNTI based on the C-RNTI carried in the first message.

Although the parent node of the child node does not change before and after the handover of the child node, an access network device serving the child node changes. For example, the access network device serving the child node changes from the source access network device to the target access network device, and some identifiers (for example, an NCGI) of the cell accessed by the child node are identifiers of the access network device. Therefore, before and after the handover of the child node, although the accessed cell does not change, the identifiers of the accessed cell change, in other words, some configurations of the cell accessed by the child node change. In the foregoing several implementations, the C-RNTI of the child node may remain unchanged, and therefore a process of configuring the C-RNTI by the child node is simplified, a large amount of C-RNTI reconfiguration in IAB group handover is avoided, power consumption of the child node is reduced, and power of the child node is saved.

Optionally, the C-RNTI of the child node before and after the handover may change. For example, the first message may include an updated C-RNTI, and the child node may use the updated C-RNTI in the first message in a handover process and after completing the handover. This is not limited in this application.

S703: The child node starts a timer.

After receiving the first message, the child node may start the timer.

Optionally, the timer may be used to monitor whether the handover of the child node succeeds. Optionally, duration of the timer may be included in the first message.

S704: The child node sends a second message to the parent node.

Optionally, after the child node receives the first message, random access-free handover may be performed on the child node. After the handover is completed, the child node sends the second message to the parent node.

S705: The parent node sends the second message to the target access network device.

Optionally, S705 and S706 may be described as: The child node sends the second message to the target access network device via the parent node, or the target access network device receives the second message from the child node via the parent node.

Optionally, the second message may be a first RRC reconfiguration complete message, and the first RRC reconfiguration complete message may be referred to as a handover complete message.

S706: The target access network device sends first indication information to the parent node.

Optionally, after parsing the second message, the target access network device may determine that reconfiguration of the child node is completed, and the target access network device may send the first indication information to the parent node, so as to trigger the parent node to send second indication information to the child node.

Optionally, the first indication information may indicate the parent node to send the second indication information to the child node, or may indicate that reconfiguration of the child node is completed, or may indicate that the child node may stop the timer, or the first indication information may indicate other content. Indication information that can trigger the parent node to send the second indication information to the child node may be the first indication information in this application.

Optionally, the first indication information may include an identifier of the child node. It may be understood that the parent node may have a plurality of child nodes. The first indication information carries identifiers of the child nodes. After receiving the first indication information, the parent node may determine a specific child node to which the parent node sends the second indication information.

S706 is optional.

S707: The parent node sends the second indication information to the child node.

In an implementation, S706 is performed. In response to the first indication information, the parent node sends the second indication information to the child node.

In another implementation, S706 is omitted. After receiving the second message from the child node, or after sending the second message to the target access network device, the parent node may determine that reconfiguration of the child node is completed, and the parent node may send the second indication information to the child node.

In the foregoing two implementations, the second indication information may indicate to stop the timer. In embodiments of this application, the timer may be a T304 timer (timer) or may have another name. This is not limited in this application.

For example, indication may be performed based on the second indication information in an explicit manner. The second indication information occupies one bit (bit) or more bits, and information about the one bit or more bits indicates to stop the timer.

For another example, indication may be performed based on the second indication information in an implicit manner. The second indication information may be a first-type MAC CE, and the first-type MAC CE may be understood as a MAC CE of a specific type. When receiving the MAC CE of such a type, the child node may stop the timer. The first-type MAC CE may carry no information or carry information. This is not limited in embodiments of this application. Optionally, a type of the MAC CE may be identified by a protocol-specified logical channel identifier (Logical channel ID, LCID) corresponding to the MAC CE. The type of the MAC CE is not limited in this application.

For another example, indication may be performed based on the second indication information in an implicit manner. The second indication information may be a MAC CE carrying a UE contention resolution identity (UE Contention Resolution Identity). Optionally, the MAC CE may be a MAC CE of a specific type. Optionally, a type of the MAC CE may be identified by a protocol-specified logical channel identifier (logical channel identifier, LCID) corresponding to the MAC CE.

Optionally, the MAC CE carrying the UE contention resolution identity may be transmitted on a PDSCH, and the PDSCH is scheduled through a PDCCH, where the PDCCH is scrambled using the C-RNTI of the child node. Therefore, after the child node successfully parses the MAC CE carrying the UE contention resolution identity, it may be considered that the child node receives the second indication information, and therefore stops the timer.

Optionally, the MAC CE carrying the UE contention resolution identity may be a MAC CE of any type. This is not limited in embodiments of this application.

Optionally, the UE contention resolution identity may be any value. For example, the value may be the C-RNTI of the child node, or may be a value of one or more bits in the C-RNTI, or may be any value. The value may not have specific meaning. This is not limited in this application.

S708: The child node stops the timer.

After receiving the second indication information, the child node stops the timer based on the second indication information.

In the method in FIG. 7, the parent node sends the second indication information to the child node, and the child node may stop the timer in a timely manner. This avoids a handover failure and subsequent failure processing (for example, performing a recovery operation such as RRC reestablishment) caused by timeout of the timer, reduces a delay, and improves service transmission continuity.

Optionally, the method in FIG. 7 may further include: The target access network device sends a third message to the parent node. Specifically, the method may include: The target access network device sends the third message to the source access network device, and the source access network device sends the third message to the parent node.

Optionally, the third message may be a third RRC reconfiguration message.

In an implementation, the parent node may perform random access-free handover based on the third message. The third message may explicitly or implicitly indicate the parent node not to perform random access. For details, refer to content in the first message, and details are not described herein again. Optionally, the C-RNTI of the parent node before and after the handover may remain unchanged or may change. For details, refer to content in S702. Details are not described herein again.

In another implementation, the parent node may perform handover with random access based on the third message. The third RRC reconfiguration message may include the random access configuration information.

In the foregoing two implementations, after receiving the third message, the parent node may start a timer. The timer is used to monitor whether handover of the parent node succeeds.

Optionally, the parent node may first receive the first message or first send the first message to the child node, and then receive the third message. In this way, the following case can be avoided: Handover is performed on the parent node after the parent node receives the third message, and consequently the parent node stops receiving a message and/or data from a source donor node and cannot forward the first message for the child node. This may be specifically implemented in the following implementations.

In an implementation, after the parent node receives the first message or sends the first message to the child node, the parent node sends third indication information to the source access network device, to trigger the source access network device to send the third message to the parent node.

Optionally, the third indication information may indicate that the source access network device sends the third message to the parent node, or may indicate that the parent node has received the first message from the source access network device, or has sent the first message to the child node, or may indicate that the parent node is ready to receive the third message, or the like. It should be noted that information for triggering the source access network device to send the third message to the parent node may all be considered as the third indication information in this application, and the third indication information may further indicate other content. This is not limited in embodiments of this application.

In this application, one child node is used for description. It may be understood that the parent node may have one or more child nodes, and each child node receives a first message of the child node via the parent node.

Optionally, the parent node may receive first messages of all the child nodes from the source access network device. Alternatively, after sending the first message of each child node to the child node, the parent node sends the third indication information to the source access network device.

Optionally, the third indication information may be carried in an F1AP message, and the FLAP message may be a non-UE associated (non-UE associated) F1AP message.

Alternatively, optionally, after the parent node receives the first messages of all the child nodes or sends the first message of each child node to the child node, the parent node may send an F1AP message to the source access network device, for example, a UE context modification response message for the child node. The third indication information may be carried in a UE context modification response message sent by the parent node for the last child node.

In another implementation, after the parent node receives the first message or sends the first message to the child node, the parent node may send an F1AP message to the source access network device, for example, a UE context modification response message for the child node. The source access network device may send the third message to the parent node after receiving the UE context modification response message.

It may be understood that, if the parent node has a plurality of child nodes, after the parent node receives the first message of each child node or sends the first message of each child node to the child node, the parent node may send the F1AP message to the source access network device, for example, a UE context modification response message for the child node. The source access network device may send the third message to the parent node after receiving UE context modification response messages for all the child nodes sent by the parent node.

Optionally, the method in FIG. 7 may further include: The source access network device sends a handover request message to the target access network device. The handover request message includes one or more of the following: a cell radio network temporary identifier of one or more nodes, an identifier of a cell accessed by one or more nodes, and hierarchical information of one or more descendant nodes in a network topology. The one or more nodes are one or more nodes in the group, and include the child node and the parent node.

Optionally, the hierarchical information of the one or more nodes in the network topology is used to determine duration of one or more timers of the one or more nodes.

Optionally, the first message and/or the third message may be carried in the handover request response message sent by the target access network device to the source access network device.

Optionally, the first message includes information about the duration of the timer. In S703, the child node may set the timer based on the information about the duration of the timer, and may start the timer.

Optionally, the third message includes information about duration of the timer. After receiving the third message, the parent node may set the timer based on the information about the duration of the timer in the first message, and may start the timer.

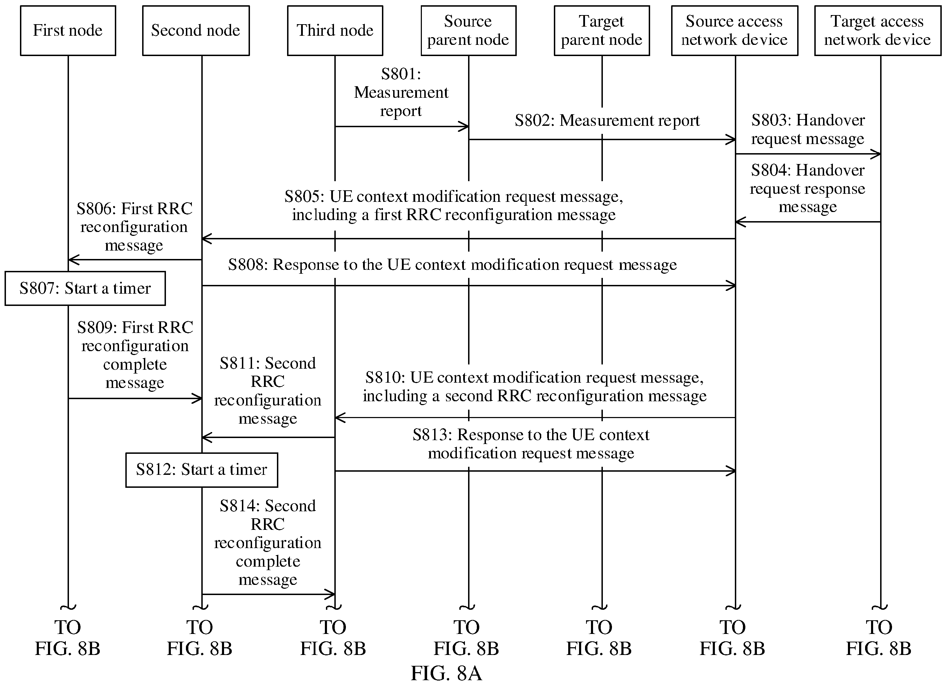

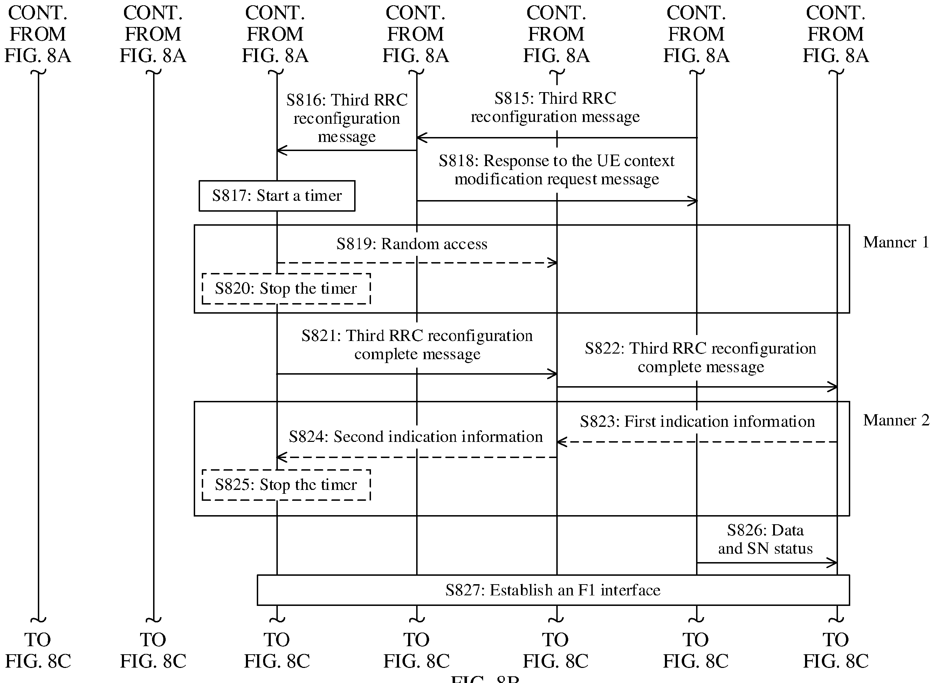

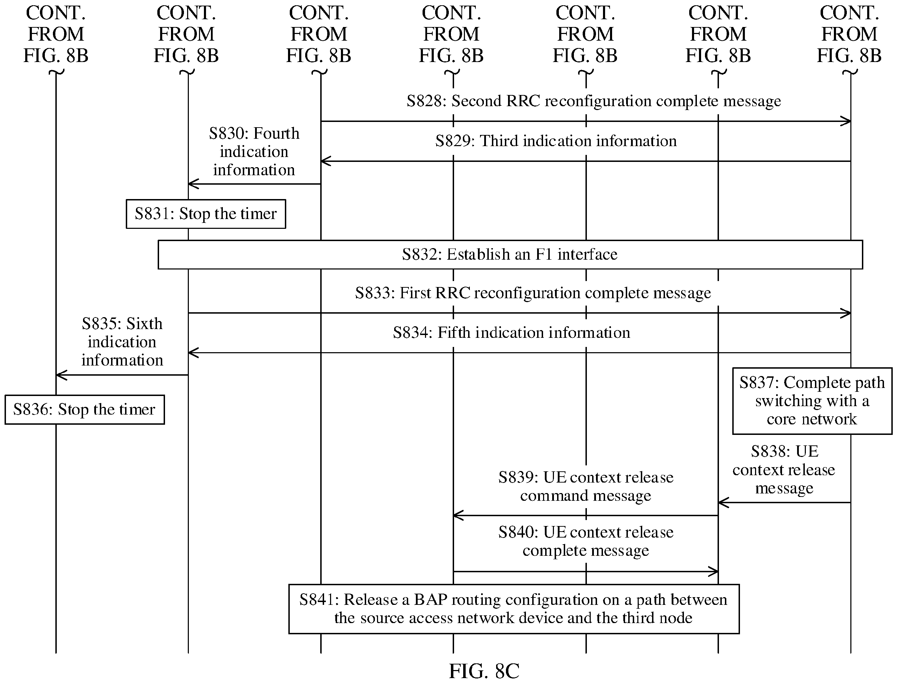

FIG. 8A, FIG. 8B, and FIG. 8C show a group handover method according to an embodiment of this application. The method may be applied to relay systems such as an IAB system. FIG. 7 is further described below with reference to FIG. 8A, FIG. 8B, and FIG. 8C.

In FIG. 8A, FIG. 8B, and FIG. 8C, group handover is performed on a group, and handover from a source access network device to a target access network device is performed. The group includes at least a first node, a second node, and a third node. The third node is a migrating IAB node, the third node is a parent node of the second node, and the second node is a parent node of the first node. The third node is connected to a source parent node before the handover, and the third node is connected to a target parent node after the handover. Optionally, the source parent node may be the source access network device, and the target parent node may be the target access network device. The migrating IAB node is an IAB node whose parent node needs to be replaced in a handover process.

Optionally, the first node and the second node in FIG. 8A, FIG. 8B, and FIG. 8C may be respectively the child node and the parent node in FIG. 7, or the second node and the third node in FIG. 8A, FIG. 8B, and FIG. 8C may be respectively the child node and the parent node in FIG. 7.

It should be noted that, optionally, the third node may further have one or more other child nodes. Content of the second node in this application is also applicable to the one or more other child nodes of the third node. Optionally, the second node may further have one or more other child nodes. Content of the first node in this application is also applicable to the one or more other child nodes of the second node.

FIG. 6 is used as an example. The first node is a terminal 2, the second node is an IAB node 4, the third node is an IAB node 1, the source access network device is an IAB donor 1, the target access network device is an IAB donor 2, the source parent node is an IAB node 2, and the target parent node is an IAB node 3. In FIG. 6, the IAB node 1 further has a child node terminal 1, and content of the IAB node 4 is also applicable to the terminal 1. If the IAB node 4 further has a child node IAB node 5 (not shown in the figure), content of the terminal 2 is also applicable to the IAB node 5.

As shown in FIG. 8A, FIG. 8B, and FIG. 8C, the method includes the following steps.

S801: The third node sends a measurement report to the source parent node.

S802: The source parent node sends the measurement report to the source access network device.

S803: The source access network device sends a handover request message to the target access network device.

Optionally, the source access network device determines, based on the measurement report, that the third node is handed over from the source access network device to the target access network device, and sends a handover request message to the target access network device.

Optionally, the group handover request message includes one or more of the following: a cell identifier of a cell accessed by each node (for example, an IAB node or a terminal) in the group, a C-RNTI of the node in the accessed cell, and hierarchical information of the node in a network topology.

Optionally, the cell identifier of the cell accessed by each node may be a cell identifier of a primary cell accessed by the node, and the primary cell may be referred to as a special cell (special Cell, SpCell).

Optionally, in the foregoing plurality of implementations, the cell identifier may include one or more of a physical cell identifier (physical cell identifier, PCI), an NR cell identity (NR Cell Identity, NCI), an NR cell global identifier (NR cell global identifier, NCGI), and an E-UTRAN cell global identifier (E-UTRAN cell global identifier, ECGI).

Optionally, a cell identifier of a cell accessed by the migrating IAB node (namely, the third node) may be a cell identifier of a target cell of the third node. It may be understood that, after determining that handover is to be performed, the source access network device may determine to carry the cell identifier of the target cell of the third node in the handover request message and send the handover request message to the target access network device. Optionally, the cell identifier of the target cell may be an NCGI or an ECGI.

Optionally, a parent node of a descendant node of the migrating IAB node does not change in a group handover process. A cell identifier of a cell accessed by the descendant node may be a cell identifier of a cell accessed by the descendant node before the handover.

Optionally, a cell identifier of a cell accessed by a node and a C-RNTI of the node in the accessed cell may uniquely identify the node.

Optionally, the hierarchical information indicates a relative location of a node in a network topology or a connection relationship between the node and another node.

For example, the hierarchical information may be a hierarchy or a location relative to that of the migrating relay node (namely, the third node). For example, assuming that a hierarchy of the third node is 0 (which may be another value, and is not limited in embodiments of this application), a hierarchy of one or more child nodes of the third node is 1, that is, a hierarchy of the second node is 1; a hierarchy of one or more grandchild nodes of the third node is 2, that is, a hierarchy of the first node is 2; and so on. For example, if a descendant node is connected to the third node through an X-hop link, hierarchical information of the descendant node may be denoted as X, where X is a positive integer. Alternatively, the hierarchical information may be a hierarchy relative to that of another node. The another node may be the second node, the first node, a node on a path from the source parent node to the source donor node, or the like. This is not limited in embodiments of this application.

In an implementation, the handover request message may be a group handover request message, and the group handover request message may be referred to as a group handover request message, and is used to request handover for a group.

Table 1 is a schematic diagram of a group handover request message. As shown in Table 1, the group handover request message includes a plurality of items (items), each item corresponds to one node, an item of each node further includes one or more items, and the one or more items include a cell identifier of a cell accessed by each node, a C-RNTI of each node, and/or hierarchical information of each node. In Table 1, the item of each node is parallel.

**Table 1**

| >Handover request message | | |
|---|---|---|
| | >>Third node | |
| | | >>>Cell identifier of the accessed cell, a C-RNTI, and/or hierarchical information |
| | >>Second node | |
| | | >>>Cell identifier of an accessed cell, a C-RNTI, and/or hierarchical information |
| | > > First node | |
| | | >>>Cell identifier of an accessed cell, a C-RNTI, and/or hierarchical information |

Table 2 is another schematic diagram of a group handover request message. As shown in Table 2, the group handover request message includes one item, the item corresponds to the third node, the item of the third node further includes one or more items, the one or more items include the cell identifier of the cell accessed by the third node, a C-RNTI of the third node, and/or hierarchical information of the third node, and the second node. An item of the second node includes a cell identifier of a cell accessed by the second node, a C-RNTI of the second node, and/or hierarchical information of the second node, and the first node. An item of the second node includes a cell identifier of a cell accessed by the second node, a C-RNTI of the second node, and/or hierarchical information of the second node. In Table 2, an item of each node includes an item of a child node of the node.

**Table 2**

| >Handover request message | | | |
|---|---|---|---|
| | >>Third node | | |
| | | >>>Cell identifier of the accessed cell, the C-RNTI, and/or the hierarchical information | |
| | | >>>Second node | |
| | | | >>>>Cell identifier of the accessed cell, the C-RNTI, and/or the hierarchical information |
| | | >>>>First node | |
| | | | >>>>Cell identifier of the accessed cell, the C-RNTI, and/or the hierarchical information |

Optionally, when the item of each node shown in Table 2 includes the item of the child node of the node, the item of each node may not carry hierarchical information of the node, and hierarchical information of nodes may be obtained based on a mutual inclusion relationship between items of the nodes. For example, a relative topology relationship between the first node, the second node, and the third node (where the second node is a child node of the third node, and the first node is a child node of the second node) may be deduced based on a structure of the information in Table 2, and the hierarchical information of the nodes may be further learned (where for example, if a hierarchy of the third node is 0, a hierarchy of the second node level is 1, and a hierarchy of the first node is 2).

Table 1 and Table 2 are merely examples. The group handover request message may exist in another form. This is not limited in embodiments of this application.

In another implementation, the handover request message may include one or more independent handover request messages, where one handover request message corresponds to one node, or this may be understood as that one handover request message is for requesting handover for one node.

Optionally, in this implementation, a handover request message of each node includes a cell identifier of a cell accessed by the node, a C-RNTI of the node in the accessed cell, and/or hierarchical information of the node in a network topology.

S804: The target access network device sends a handover request response message to the source access network device.

In an implementation, if the handover request message in S803 is a group handover request message, the handover request response message in S804 may be a group handover request response message, and the group handover request response message may be referred to as a group handover request response message.

Optionally, the group handover request response message includes an RRC reconfiguration message of each node.

For clarity, in this application, an RRC reconfiguration message of the first node is referred to as a first RRC reconfiguration message, an RRC reconfiguration message of the second node is referred to as a second RRC reconfiguration message, and an RRC reconfiguration message of the third node is referred to as a third RRC reconfiguration message.

In this implementation, the group handover request response message includes the first RRC reconfiguration message, the second RRC reconfiguration message, and the third RRC reconfiguration message.

In another implementation, for example, the handover request message in S803 includes one or more independent handover request messages, and the handover request response message in S804 may include one or more independent handover request response messages, where each handover request response message corresponds to one node, and a handover request response message of each node includes an RRC reconfiguration message of the node.

In the another implementation, the handover request message in S803 includes a first handover request message, a second handover request message, and a third handover request message, and the handover request response message in S804 includes a first handover request response message, a second handover request response message, and a third handover request response message. The first handover request response message is a handover request response message of the first node, and includes a first RRC reconfiguration message; the second handover request response message is a handover request response message of the second node, and includes a second RRC reconfiguration message; and the third handover request response message is a handover request response message of the third node, and includes a third RRC reconfiguration message.

Optionally, in the foregoing plurality of implementations, the RRC reconfiguration message of each node may include information about duration of a timer of the node. The following further describes the information about the duration of the timer of the node.

Optionally, the target access network device may determine duration of a timer of each node based on the hierarchical information of the node in the handover request response message in S803.

Optionally, a descendant node of a higher hierarchy may be understood as a node with a larger hop quantity of a backhaul link between the node and the migrating node (namely, the third node), and duration of a timer is longer. A node of a lower hierarchy may be understood as a node with a smaller hop quantity of a backhaul link between the node and the third node, and duration of a timer is shorter.

For example, the hierarchy of the first node is 2, and duration of a timer of the first node is 200 ms; the hierarchy of the second node is 1, and duration of a timer of the second node is 150 ms; and the hierarchy of the third node is 0, and duration of a timer of the third node is 100 ms.

In an implementation, the information about the duration of the timer may directly indicate the duration of the timer.

For example, information about the duration of the timer of the first node indicates 200 ms, information about the duration of the timer of the second node indicates 150 ms, and information about the duration of the timer of the third node indicates 100 ms.

In another implementation, the information about the duration of the timer may include one or more parameters, and the one or more parameters are used to determine the duration of the timer. After receiving the information about the duration of the timer of each node, the node may obtain the duration of the timer based on the one or more parameters.

Optionally, the duration of the timer may be obtained by performing an operation on the one or more parameters. The operation may include multiplication, exponentiation, or the like. An operation manner is not limited in this application.

For example, the one or more parameters include duration of a basic timer and a scale factor, and each node may perform an operation based on the duration of the basic timer and the scale factor, to obtain the duration of the timer of the node.

For example, the information about the duration of the timer of the first node includes duration 50 ms of the basic timer and a scale factor 4, and the first node may obtain duration 200 ms of the timer of the first node by multiplying 50 by 4. The information about the duration of the timer of the second node includes the duration 50 ms of the basic timer and a scale factor 3, and the first node may obtain duration 150 ms of the timer of the first node by multiplying 50 by 3. The information about the duration of the timer of the first node includes the duration 50 ms of the basic timer and a scale factor 2, and the first node may obtain duration 100 ms of the timer of the first node by multiplying 50 by 2.

The source access network device sends the hierarchical information to the target access network device, so that the target access network device can properly determine duration of a timer based on a hierarchy of a node, thereby avoiding a handover failure caused by improper setting of the duration of the timer, reducing a handover delay, and reducing signaling overheads.

Optionally, mutual reference may be made to the handover request message and the handover request response message in S803 and S804 and the handover request message and the handover request response message in FIG. 7.

S805: The source access network device sends a downlink F1AP message to the second node, for example, a UE context modification request (UE context modification request) message, where the message includes the first RRC reconfiguration message. Optionally, the downlink F1AP message (for example, the UE context modification request message) may further include indication information indicating the second node to stop data transmission with the first node.

Optionally, the indication information may be carried in a transmission action indicator (transmission action indicator) information element. The second node may read the indication information, and then stop data transmission with the first node, where the data transmission includes downlink data transmission and/or uplink data transmission with the first node. Specifically, after performing step S806, the second node may stop data transmission with the first node.

S806: The second node sends the first RRC reconfiguration message to the first node.

Optionally, the first RRC reconfiguration message may not include random access configuration information. Optionally, the first RRC reconfiguration message may indicate a child node not to perform random access. The indication may be specifically explicit or implicit. For details, refer to content of the first message in S702.

Optionally, the C-RNTI of the first node before and after the handover may remain unchanged. Specifically, the first RRC reconfiguration message may not include the C-RNTI of the first node, or may include indication information indicating that the C-RNTI of the first node remains unchanged, or may include the C-RNTI that is of the first node and that is used before the first node receives the first message. Alternatively, the C-RNTI of the first node before and after the handover may change. For details, refer to content in S702.

S807: The first node starts the timer.

After receiving the first RRC reconfiguration message, the first node may start the timer. For details, refer to content in S703.

Optionally, if the first RRC reconfiguration message includes the information about the duration of the timer, the first node may obtain the duration of the timer based on the information about the duration of the timer, set the timer, and then start the timer.

S808: The second node sends an uplink F1AP message to the source donor node, for example, a UE context modification response (UE CONTEXT MODIFICATION RESPONSE) message.

Step S808 is an optional step. If the downlink F1AP message in step S805 is a UE context modification request message, step S808 is required.

The UE context modification response message in S808 may be understood as a UE context modification response message fed back by the second node for the first node.

S809: The first node sends a first RRC reconfiguration complete message to the second node.

S810: The source access network device sends a downlink F1AP message to the third node, for example, a UE context modification request (UE context modification request) message, where the message includes the second RRC reconfiguration message. Optionally, the downlink F1AP message (for example, the UE context modification request message) may further include indication information indicating the third node to stop data transmission with the second node. The third node may read the indication information, and then stop data transmission with the second node, where the data transmission includes downlink data transmission and/or uplink data transmission with the second node. For content of the indication information, refer to content in S805.

Optionally, S810 may be performed after S805 and/or S806. Specifically, the following manners may be used.

In an implementation, after S805 or S806, the second node may send indication information to the source access network device, to trigger the source access network device to send the second RRC reconfiguration message to the second node, that is, trigger the source access network device to perform S810. For the indication information, refer to content of the third indication information in FIG. 7.

Optionally, if the second node has a child node in addition to the first node, the second node may send indication information to the source access network device after receiving RRC reconfiguration messages of all child nodes from the source access network device or sending RRC reconfiguration messages to all child nodes.

For example, FIG. 6 is used as an example. The second node is the IAB node 4, and the first node may be the terminal 2. The IAB node 4 may further include the child node IAB node 5 (not shown in FIG. 6) in addition to the child node terminal 2. After the IAB node 4 receives the first RRC reconfiguration message (an RRC reconfiguration message of the terminal 2) and an RRC reconfiguration message of the IAB node 5 from the IAB donor 1, the IAB node 4 sends the indication information to the IAB donor 1. Alternatively, after the IAB node 4 sends the first RRC reconfiguration message to the terminal 2, and the IAB node 4 sends an RRC reconfiguration message of the IAB node 5 to the IAB node 5, the IAB node 4 sends the indication information to the IAB donor 1.

Optionally, the indication information may be carried in the uplink F1AP message sent to the source access network device.

Optionally, the indication information may be carried in an uplink F1AP message (for example, a response to the UE context modification request message) sent by the second node for the last child node.

For example, the IAB node 4 first receives a UE context modification request message of the terminal 2 from the IAB donor 1, where the UE context modification request message includes the RRC reconfiguration message of the terminal 2. The IAB node 4 sends the RRC reconfiguration message to the terminal 2. The IAB node 4 sends a response to the UE context modification request message to the IAB donor 1 for the terminal 2. Then, the IAB node 4 receives a UE context modification request message of the IAB node 5 from the IAB donor 1, where the UE context modification request message includes the RRC reconfiguration message of the IAB node 5. The IAB node 4 sends the RRC reconfiguration information to the IAB node 5. The IAB node 4 sends a response to the UE context modification request message to the IAB donor 1 for the IAB node 5. The indication information may be carried in the response to the UE context modification request message sent by the IAB node 4 to the IAB donor 1 for the IAB node 5.

In another implementation, the source access network device may perform S810 after S808.

Optionally, if the second node has a child node in addition to the first node, the source access network device may perform S810 after receiving UE context modification response messages for all child nodes from the second node.

For example, after receiving, from the IAB node 4, the response to the UE context modification request message for the terminal 2 and the response to the UE context modification request message for the IAB node 5 that are sent by the IAB node 4, the IAB donor 1 performs S810.

The foregoing two implementations are for avoiding the following case: If S810 is performed before S805, after the second node receives the second RRC reconfiguration message, a handover action is performed on the second node, the second node stops data transmission with the source access network device, and consequently the second node cannot receive the first RRC reconfiguration message and cannot forward the first RRC reconfiguration message to the first node. The implementations can ensure that the second node can forward the first RRC reconfiguration message to the first node, so that a handover success rate of the first node is ensured.

S811: The third node sends the second RRC reconfiguration message to the second node.

Optionally, the second RRC reconfiguration message may not include the random access configuration information. Optionally, the second RRC reconfiguration message may indicate a child node not to perform random access. The indication may be specifically explicit or implicit. For details, refer to content of the first message in FIG. 7.

Optionally, the C-RNTI of the second node before and after the handover may remain unchanged. Specifically, the second RRC reconfiguration message may not include the C-RNTI of the second node, or may include indication information indicating that the C-RNTI of the second node remains unchanged, or may include the C-RNTI of the second node used before the second node receives the first message. Alternatively, the C-RNTI of the second node before and after the handover may change. For details, refer to content in S702.

S812: The second node starts the timer.

After receiving the second RRC reconfiguration message, the second node may start the timer. For details, refer to content in S703.

Optionally, if the second RRC reconfiguration message includes the information about the duration of the timer, the second node may obtain the duration of the timer based on the information about the duration of the timer, set the timer, and then start the timer.

S813: The third node sends an uplink F1AP message to the source donor node, for example, a UE context modification response message.

Step S813 is an optional step. If the downlink F1AP message in step S810 is a UE context modification request message, step S813 is required. The UE context modification response message in S813 may be understood as a UE context modification response message fed back by the third node for the second node.

S814: The second node sends a second RRC reconfiguration complete message to the third node.

S815: The source access network device sends a downlink F1AP message to the source parent node, for example, a UE context modification request (UE context modification request) message, where the message includes the third RRC reconfiguration message.

Optionally, the downlink F1AP message (for example, the UE context modification request message) may further include indication information indicating the source parent node to stop data transmission with the third node. The source parent node may read the indication information, and then stop data transmission with the third node, where the data transmission includes downlink data transmission and/or uplink data transmission with the third node. For content of the indication information, refer to content in S805 and S810.

Optionally, similar to the foregoing case in which S810 is performed after S805 and/or S806, S815 may be performed after S810 and/or S811. Specifically, this may be implemented in the following manners.

In an implementation, after S810 or S811, the third node may send indication information to the source access network device, to trigger the source access network device to send the third RRC reconfiguration message to the third node. For the indication information, refer to content of the third indication information in FIG. 7.

Optionally, if the third node has a child node in addition to the second node, the third node may send the indication information to the source access network device after receiving RRC reconfiguration messages of all child nodes from the source access network device or sending RRC reconfiguration messages to all child nodes.

For example, FIG. 6 is used as an example. The third node is the IAB node 1, the second node is the IAB node 4, and the IAB node 1 may have the child node terminal 1 in addition to the child node IAB node 4. After the IAB node 1 receives the second RRC reconfiguration message (an RRC reconfiguration message of the IAB node 4) and an RRC reconfiguration message of the terminal 1 from the IAB donor 1, the IAB node 1 may send the indication information to the IAB donor 1. Alternatively, after the IAB node 1 sends the second RRC reconfiguration message to the IAB node 4, and the IAB node 1 sends an RRC reconfiguration message of the terminal 1 to the terminal 1, the IAB node 1 sends the indication information to the IAB donor 1.

In another implementation, the source access network device may perform S815 after S813.

Optionally, if the third node has a child node in addition to the second node, the source access network device may perform S815 after receiving UE context modification response messages for all child nodes from the third node.

For example, after receiving, from the IAB node 1, a response to the UE context modification request message for the terminal 1 and a response to the UE context modification request message for the IAB node 4 that are sent by the IAB node 1, the IAB donor 1 performs S815.

S816: The source parent node sends the third RRC reconfiguration message to the third node.

In an implementation, the third RRC reconfiguration message may indicate the third node to perform random access in the target cell, and the third RRC reconfiguration message may include the cell identifier (for example, a PCI of the target cell) of the target cell. The target cell is a cell served by the target parent node of the third node.

Optionally, the third RRC reconfiguration message may include the random access configuration information and/or a new C-RNTI.

In another implementation, the third RRC reconfiguration message may indicate the third node not to perform random access.

Optionally, the third RRC reconfiguration message may not include the random access configuration information. Optionally, the third RRC reconfiguration message may indicate a child node not to perform random access. The indication may be specifically explicit or implicit. For details, refer to content of the first message in FIG. 7.

Although the parent node of the third node changes, in other words, the parent node changes from the source parent node to the target parent node, if the source parent node is synchronized with the target parent node, the third node may not need to re-synchronize with the target parent node. The third node does not perform random access, so that a delay caused by random access can be avoided, a handover delay can be reduced, and a case in which random access resources are limited can be avoided.

Optionally, the C-RNTI of the third node before and after the handover may remain unchanged. Specifically, the third RRC reconfiguration message may not include the C-RNTI of the third node, or may include indication information indicating that the C-RNTI of the third node remains unchanged, or may include the C-RNTI of the third node before the third node receives the third RRC reconfiguration message. Alternatively, the C-RNTI of the third node before and after the handover may change. For details, refer to content in S702.

S817: The third node starts the timer.

After receiving the third RRC reconfiguration message, the third node may start the timer. For details, refer to content in S703.

Optionally, if the third RRC reconfiguration message includes the information about the duration of the timer, the third node may obtain the duration of the timer based on the information about the duration of the timer, set the timer, and then start the timer.

S818: The source parent node sends an uplink F1AP message to the source donor node, for example, a UE context modification response message.

Step S818 is an optional step. If the downlink F1AP message in step S815 is a UE context modification request message, step S818 is required. The UE context modification response message in S818 may be understood as a UE context modification response message fed back by the source parent node for the third node.

Optionally, after the third node receives the third RRC reconfiguration message, the third node may perform or not perform random access in the target cell based on the third RRC reconfiguration message. The following provides descriptions with reference to Manner 1 and Manner 2. It should be noted that either Manner 1 or Manner 2 is performed. Manner 1 includes S819 and S820, and Manner 2 includes S823 to S825. Both S821 and S822 exist regardless of Manner 1 or Manner 2.

S819: The third node may perform random access based on the third RRC reconfiguration message.

In this implementation, the parent node of the third node changes, and the third node may re-synchronize with the target parent node in a random access procedure, so as to ensure performance of communication between the third node and the target parent node.

S820: The third node stops the timer.

After the third node successfully performs random access in S819, the third node may stop the timer.

S821: The third node sends a third RRC reconfiguration complete message to the target parent node.

S822: The target parent node sends the third RRC reconfiguration complete message to the target access network device.

Optionally, the third RRC reconfiguration complete message in S822 may be carried in an uplink F1AP message, for example, an uplink RRC message transfer (UL RRC message transfer) message.

S823: The target access network device sends first indication information to the target parent node.

In Manner 2, the third node does not perform random access, and S819 and S820 do not exist. After S821 and S822, the target access network device may determine, after parsing the third RRC reconfiguration complete message, that the handover of the third node is completed, and the target access network device may send the first indication information to the target parent node, to trigger S824.

S823 is optional.

S824: The target parent node sends second indication information to the third node.

In an implementation, S823 is performed. In response to the first indication information, the target parent node sends the second indication information to the third node.

In another implementation, S823 is omitted. After S821 or S822, the target parent node sends the second indication information to the third node.

S825: The third node stops the timer.

After receiving the second indication information, the third node stops the timer based on the second indication information.

S826: The source access network device sends, to the target access network device, a message including a data packet transfer status, for example, a sequence number (sequence number, SN) status transfer (SN Status Transfer) message.

The message includes transfer status information of an uplink data packet and/or a downlink data packet of the source access network device, and the uplink data packet and/or downlink data packet may be a PDCP packet data unit (packet data unit, PDU).

After receiving the SN Status Transfer message, the target access network device may continue uplink and/or downlink data transmission based on the data packet transfer status in the SN Status Transfer message after the handover of the third node is completed, to avoid a loss of service data of the terminal.

Optionally, if a CU of the source access network device is in a CP-UP separation architecture, a CP of the CU of the source access network device may initiate a bearer context modification procedure, to obtain an uplink/a downlink data packet transfer status (for example, SN status information of a PDCP PDU corresponding to a data radio bearer of each UE), and exchange endpoint configuration information used for data forwarding (data forwarding) between the source access network device and the target access network device. For example, the CP of the CU of the source access network device may send a bearer context modification request message to an UP of the CU of the source access network device, and the UP of the CU of the source access network device may send a bearer context modification response message to the CP of the CU of the source access network device. The bearer context modification response message includes SN status information of an uplink/downlink PDCP PDU, and may further include tunnel endpoint information used by the UP of the CU of the source access network device for data forwarding (data forwarding).

Optionally, if the target access network device is in an architecture with separation of a CP of a CU and a UP of the CU, the source access network device sends data and an SN status to the CP of the CU of the target access network device. The CP of the CU of the target access network device may initiate a bearer context modification procedure, to send downlink transport network layer address information (DL TNL address information) of an F1-U interface and/or a transfer status of a data packet (for example, the SN status information of the PDCP PDU corresponding to the data radio bearer of each UE) to the UP of the CU of the target access network device. For example, the CP of the CU of the target access network device may send a bearer context modification request message to the UP of the CU of the target access network device, where the context modification request message includes the transmission status of the data packet, and the UP of the CU of the target access network device may send a bearer context modification response message to the CP of the CU of the target access network device.

Optionally, the method in FIG. 8A, FIG. 8B, and FIG. 8C may further include: The target access network device sends an RRC reconfiguration message to the third node, where the RRC reconfiguration message may include configuration information of a BAP layer of the third node and/or configuration information of a backhaul RLC channel between the third node and the target parent node.

Optionally, the configuration information of the BAP layer of the third node and/or the configuration information of the backhaul RLC channel between the third node and the target parent node may be included in the third RRC reconfiguration message in S815 and S816.

Optionally, the configuration information of the BAP layer of the third node may include a BAP layer identifier allocated by the target access network device to the third node, and a default (default) uplink BAP routing identity (BAP routing ID). The configuration information of the BAP layer of the third node may further include one or more other non-default uplink BAP layer routing identities, and a BAP layer identifier that is of a next hop (namely, the target parent node) of the third node and that corresponds to each uplink BAP routing identity. Each uplink BAP routing identity (including a default uplink BAP routing identity) includes a BAP address (BAP address) and a BAP path identity (BAP path ID). The BAP address is used to identify the target access network device or a DU of the target access network device. The BAP path ID is used to identify a transmission path from the third node to the device identified by the BAP address.

It may be understood that the configuration information of the BAP layer of the third node included in the RRC reconfiguration message may be for transmitting a corresponding data packet in step S827, where the data packet includes, for example, an F1AP message for establishing an F1 interface between the third node and the target access network device, and an SCTP handshake message related to a process of establishing an SCTP association between the third node and the target access network device.

Optionally, the configuration information of the backhaul RLC channel between the third node and the target parent node may include configuration information of a default backhaul RLC channel between the third node and the target parent node, and the like.

S827: The third node establishes the F1 interface with the target access network device.

Optionally, before establishing the F1 interface, the third node establishes the SCTP association (Association) with the target access network device.

For example, the third node may initiate an F1 interface establishment process to the target access network device. For another example, the third node may initiate an F1 interface re-establishment process to the target access network device, to trigger the target access network device to request, from the source access network device, a context that is of an F1 interface between the source access network device and the third node and that is maintained by the source access network device, and then the target access network device updates the context of the F1 interface. For another example, the target access network device first obtains, from the source access network device, the context that is of the F1 interface between the source access network device and the third node and that is maintained by the source access network device, and then the target access network device may initiate a context update process of the F1 interface, to update the context of the F1 interface between the source access network device and the third node.

Optionally, after S827, the method may further include: The target access network device sends an updated configuration of the BAP layer to the third node. The configuration information in this step may include one or more of the following content:
an uplink mapping configuration used when the third node serves as an access IAB node, a BAP routing identity for sending an uplink data packet, an identifier of a next-hop node corresponding to the routing identity, and an identifier of a BH RLC channel that is between the third node and the next-hop node and that is for carrying the uplink data packet of such a type, where the uplink data packet herein may be any one of the following: a UE-associated F1AP message, a non-UE associated F1AP message, a non-F1 interface message, and an F1-U data packet; and a bearer mapping relationship used when the third node serves as an intermediate IAB node, where the bearer mapping relationship specifically includes: an identifier of a previous-hop node of the third node, an identifier of a BH RLC channel on a link between the third node and the previous-hop node, an identifier of the next-hop node of the third node, and an identifier of a BH RLC channel on a link between the third node and the next-hop node.

S828: The third node sends an uplink F1AP message to the target access network device, where the uplink F1AP message includes the second RRC reconfiguration complete message.

Optionally, the second RRC reconfiguration complete message in S828 may be carried in a UL RRC message transfer message.

S829: The target access network device sends third indication information to the third node.

In S829, after receiving the second RRC reconfiguration complete message and parsing the second RRC reconfiguration complete message, the target access network device may determine that the handover of the second node is completed, and the target access network device may send the third indication information to the third node, to trigger S830.

S829 is optional.

S830: The third node sends fourth indication information to the second node.

In an implementation, S829 is performed. In response to the third indication information, the third node sends the fourth indication information to the second node.

In another implementation, S829 is omitted. After S828, the third node sends the fourth indication information to the second node.

S831: The second node stops the timer.

After receiving the fourth indication information, the second node stops the timer based on the fourth indication information.

S832: The second node establishes an F1 interface with the target access network device.

For details, refer to the foregoing process of establishing the F1 interface between the third node and the target access network device. Details are not described herein again.

Optionally, the target access network device may further send BAP layer configuration information and/or backhaul RLC channel configuration information to the second node. For details, refer to content of descriptions of the third node. The third node in S827 may be replaced with the second node.

S833: The second node sends an uplink F1AP message to the target access network device, where the uplink F1AP message includes the first RRC reconfiguration complete message.

Optionally, the first RRC reconfiguration complete message in S833 may be carried in a UL RRC message transfer message.

S834: The target access network device sends fifth indication information to the second node.

In S833, after receiving the first RRC reconfiguration complete message and parsing the first RRC reconfiguration complete message, the target access network device may determine that the handover of the first node is completed, and the target access network device may send the fifth indication information to the second node, to trigger S835.

S835: The second node sends the fifth indication information to the first node.

In an implementation, S834 is performed. In response to the fourth indication information, the second node sends the fifth indication information to the first node.

In another implementation, S834 is omitted. After S833, the second node sends the fourth indication information to the first node.

S836: The first node stops the timer.

After receiving the fifth indication information, the first node stops the timer based on the fifth indication information.

S837: The target access network device and a core network complete path switching.

Optionally, the core network changes a node from the source access network device to the target access network device, where the node is on a user plane path for transmitting a service of the third node and the descendant node of the third node.

S838: The target access network device sends a UE context release (UE context release) message to the source access network device.

Optionally, if the CU of the source access network device is in the CP-UP separation architecture, the CP of the CU of the source access network device may receive the UE context release message from the target access network device, and the CP of the CU of the source access network device may send a bearer context release command (bearer context release command) to the UP of the CU of the source access network device.

S839 and S840 describe a UE context release process of an F1 interface between the source access network device and the source parent node.

S839: The source access network device sends a UE context release command (UE context release command) message to the source parent node.

S840: The source parent node sends a UE context release complete (UE context release Complete) message to the source access network device.

S841: Release a BAP routing configuration on a path between the source access network device and the third node.

Nodes on the path between the source access network device and the third node include the source access network device and another node, for example, the source parent node, between the source access network device and the third node. The source access network device in this step may be specifically a DU part of the source access network device.

Optionally, S841 may specifically include: The source access network device sends, to the node on the path, an F1AP message for releasing a BAP layer configuration related to the third node, the first node, or the second node. After receiving the F1AP message, the node on the path releases the corresponding BAP layer configuration of the node.

Optionally, in FIG. 7 and FIG. 8A, FIG. 8B, and FIG. 8C, an action performed by an access network device (for example, the source access network device or the target access network device) may be performed by a CU or a CP of the CU of the access network device.

Optionally, the first node in FIG. 8A, FIG. 8B, and FIG. 8C may be the child node in FIG. 7, and the second node may be the parent node in FIG. 7. Mutual reference may be made to content in S804 to S807 and content in S701 to S703, mutual reference may be made to S809 and S704, mutual reference may be made to S833 and S705, and mutual reference may be made to S834 to S836 and S706 to S708. Mutual reference may be made to content of the second RRC reconfiguration message in S810 and S811 and content of the third message in FIG. 7.

Optionally, the second node in FIG. 8A, FIG. 8B, and FIG. 8C may be the child node in FIG. 7, and the third node in FIG. 8A, FIG. 8B, and FIG. 8C may be the parent node in FIG. 7. Mutual reference may be made to content in S804 and S810 to S812 and content in S701 to S703, mutual reference may be made to S814 and S704, mutual reference may be made to S828 and S705, and mutual reference may be made to S829 to S831 and S706 to S708. Mutual reference may be made to content of the third RRC reconfiguration message in S815 and S816 and content of the third message in FIG. 7.

Optionally, in FIG. 8A, FIG. 8B, and FIG. 8C, methods of the first node, the second node, and the third node may all be separately implemented. For example, the method of the third node may be separately implemented.

Optionally, in FIG. 8A, FIG. 8B, and FIG. 8C, the methods of the first node, the second node, and the third node may be implemented in a combination manner. For example, the combination may include the first node and the second node, the second node and the third node, the first node and the third node, or the first node, the second node, and the third node.

Optionally, one or more steps in FIG. 8A, FIG. 8B, and FIG. 8C may be combined in different manners. The following provides descriptions with reference to a plurality of designs.

In a possible design, the method in FIG. 8A, FIG. 8B, and FIG. 8C may include only S804, S805, and S806. To be specific, the first node receives the first RRC reconfiguration information from the target access network device via the second node, where the first RRC reconfiguration message indicates not to perform random access. Optionally, the C-RNTI of the first node before and after the handover may remain unchanged. For details, refer to content in S804, S805, and S806. Optionally, one or more other steps in FIG. 8A, FIG. 8B, and FIG. 8C may be further included.

The first RRC reconfiguration message indicates not to perform random access, so that node handover time can be reduced, a handover delay can be reduced, and signaling overheads can be saved, thereby avoiding frequent conflicts caused by limited resources used when a large quantity of nodes initiate random access or avoiding excessively long time for the nodes to wait for random access resources. In addition, the C-RNTI remains unchanged, so that a large amount of reconfiguration work can be avoided, and power consumption of the first node can be saved.

In another possible design, the method in FIG. 8A, FIG. 8B, and FIG. 8C may include only S805, S806, S810, and S811, and S810 may be performed after S805 and/or S806. For details, refer to content in FIG. 8A, FIG. 8B, and FIG. 8C. Optionally, the first RRC reconfiguration message and/or the second RRC reconfiguration message may indicate to perform or not to perform random access. This is not limited in embodiments of this application. Optionally, one or more other steps in FIG. 8A, FIG. 8B, and FIG. 8C may be further included.

S810 may occur after S805 and/or S806, so that it can be ensured that a child node sends an RRC reconfiguration message to a parent node only after receiving the RRC reconfiguration message, thereby avoiding a case in which the parent node cannot provide a service for the child node because the parent node is handed over in advance.

In still another possible design, the method in FIG. 8A, FIG. 8B, and FIG. 8C may include only S803, in other words, the source access network device sends the handover request message to the target access network device, where the handover request message includes a C-RNTI of one or more nodes, a cell identifier of an accessed cell of the one or more nodes, and/or hierarchical information of the one or more nodes in a network topology. Optionally, the target access network device determines information about duration of a timer based on the hierarchical information, carries the information about the duration in an RRC reconfiguration message, and sends the RRC reconfiguration message to the one or more nodes. For details, refer to content in FIG. 8A, FIG. 8B, and FIG. 8C. Optionally, one or more other steps in FIG. 8A, FIG. 8B, and FIG. 8C may be further included.

It can be learned from FIG. 8A, FIG. 8B, and FIG. 8C that, in group handover, in a handover start phase, an RRC reconfiguration message is first sent to a farthest node (for example, the first node in FIG. 8A, FIG. 8B, and FIG. 8C) in a group, then an RRC reconfiguration message is sent to an upper-level node level by level, and finally an RRC reconfiguration message is sent to a migrating IAB node; and in a handover completion phase, an RRC reconfiguration complete message of the migrating IAB node is first sent to the target access network device, then an RRC reconfiguration complete message of a next level-node is sent level by level, and finally an RRC reconfiguration complete message of the farthest node is sent. Therefore, it may be understood that, in the group handover, a node with a larger hop quantity of a wireless backhaul link between the node and the migrating IAB node occupies longer time in a process from a handover start to handover completion.

If duration of a timer is set improperly, a node in the group handover may fail to be handed over due to timeout of the timer. After determining that the node fails to be handed over, the node initiates RRC reestablishment. However, initiating an RRC reestablishment process causes a delay, and causes unnecessary signaling overheads. In addition, after a child node initiates RRC reestablishment, if handover of a parent node is not completed, the parent node cannot provide a service for the child node. Consequently, RRC reestablishment of the child node may fail, and the child node enters an idle state and then re-accesses a network. However, a delay required for re-accessing the network is long, and user experience is seriously affected.

The source access network device sends hierarchical information to the target access network device, and the target access network device may properly determine duration of a timer based on a hierarchy of a node. For example, a node with a larger hop quantity of a wireless backhaul link between the node and the migrating IAB node has larger duration of a timer, and a node with a smaller hop quantity of a wireless backhaul link between the node and the migrating IAB node has smaller duration of a timer. This avoids consequences caused by improper setting of the duration of the timer, reduces a handover delay, and reduces signaling overheads.

Optionally, as shown in FIG. 8A, FIG. 8B, and FIG. 8C, during group handover, each node may receive a reconfiguration message of the node. Considering that some information in the reconfiguration message of each node may be the same, this application provides a solution. In this solution, the target access network device may send the same information in a broadcast manner.

For example, the target access network device broadcasts a group reconfiguration message, where the group reconfiguration message includes a common configuration of a primary serving cell, a random access-free indication, and/or information about duration of a timer.

Optionally, the group reconfiguration message may be referred to as a group handover command.

Optionally, the information about the duration of the timer may indicate the duration of the basic timer in S804. Then, the target access network device may send a message to each node in a group, where the message includes a scale factor. The node in the group obtains duration of a timer based on the duration of the basic timer and the scale factor.

Optionally, the target access network device may further send a message to each node in the group. The message includes different information of each node, for example, a PDCP layer configuration (for example, a security-related configuration) of each node.

The same information of each node is sent in a broadcast manner, so that air interface signaling overheads can be reduced. Particularly, in an IAB system, overheads caused by separately sending signaling to a plurality of nodes in the group can be avoided in the foregoing broadcast manner.

In FIG. 7 and FIG. 8A, FIG. 8B, and FIG. 8C, a relay system is used as an example for description. It should be noted that the method in embodiments of this application is also applicable to a single-air-interface scenario in which a terminal directly accesses an access network device, for example, a scenario in which the terminal 130 directly accesses the access network device 150 in FIG. 1 for communication.

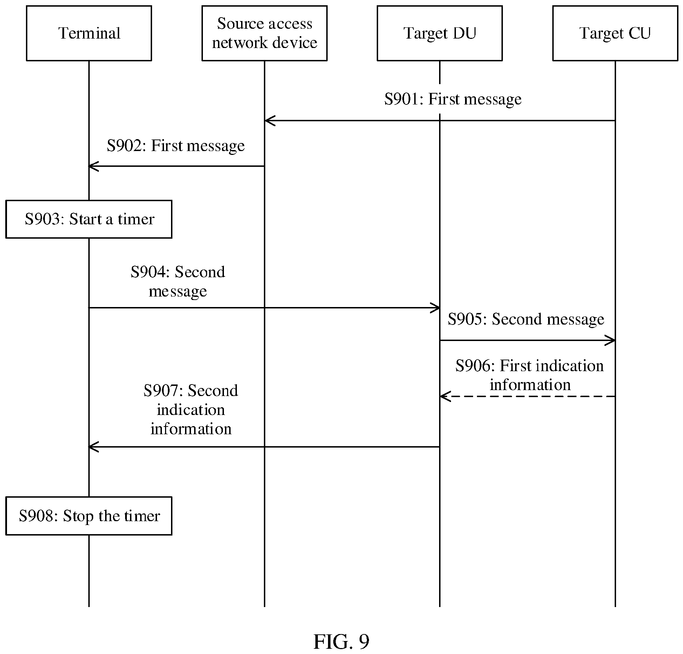

FIG. 9 shows another communication method according to an embodiment of this application. The communication method may be applied to the scenario in which the terminal directly accesses the access network device. The following provides descriptions with reference to FIG. 9. The access network device 150 may use the CU-DU separation architecture shown in FIG. 2.

Optionally, the terminal 130 may be handed over from the access network device 150 to another access network device (not shown in FIG. 1). The access network device 150 is referred to as a source access network device below, and the another access network device is referred to as a target access network device. The target access network device may use the CU-DU separation architecture shown in FIG. 2. A CU of the target access network device may be referred to as a target CU, and a DU of the target access network device may be referred to as a target DU.

S901: The target CU sends a first message to the source access network device.

Optionally, the source access network device may use the CU-DU separation architecture, where a CU of the source access network device may be referred to as a source CU, and a DU of the source access network device may be referred to as a source DU. S901 may include: The target CU sends the first message to the source CU.

S902: The source access network device sends the first message to the terminal.

Optionally, if the source access network device may use the CU-DU separation architecture, S902 may include: The source CU sends the first message to the source DU, and the source DU sends the first message to the terminal.

S903: The terminal starts a timer.

S904: The terminal sends a second message to the target DU.

S905: The target DU sends the second message to the target CU.

For the first message and the second message in S901 to S905, refer to content of the first message and the second message in FIG. 7.

S906: The target CU sends first indication information to the target DU.

S907: The target DU sends second indication information to the terminal.

For the first indication information and the second indication information in S906 and S907, refer to content of the first indication information and the second indication information in FIG. 7.

S908: The terminal stops the timer.

The target DU in FIG. 9 may perform an action of the parent node in FIG. 7, the target CU in FIG. 9 may perform an action of the access network device in FIG. 7, and the terminal in FIG. 9 may perform an action of the child node in FIG. 7. For other content in FIG. 9, refer to FIG. 7. Details are not described herein again.

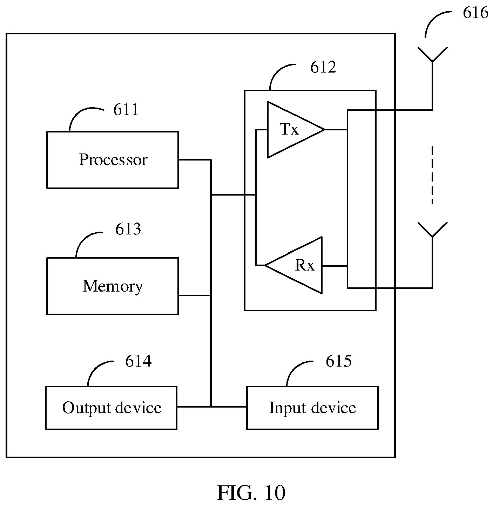

With reference to FIG. 10 to FIG. 13, the following describes apparatuses provided in embodiments of this application. The apparatuses in FIG. 10 to FIG. 13 may complete the methods in FIG. 7 to FIG. 9. Mutual reference may be made to content of the apparatuses and content of the methods.

FIG. 10 is a schematic diagram of a structure of a terminal according to an embodiment of this application. The terminal may implement functions of the terminal in the foregoing method embodiments. For ease of description, FIG. 10 shows main components of the terminal. As shown in FIG. 10,
the terminal includes at least one processor 611, at least one transceiver 612, and at least one memory 613. The processor 611, the memory 613, and the transceiver 612 are connected. Optionally, the terminal may further include an output device 614, an input device 615, and one or more antennas 616. The antenna 616 is connected to the transceiver 612, and the output device 614 and the input device 615 are connected to the processor 611.

The processor 611 is mainly configured to: process a communication protocol and communication data, control the entire terminal, execute a software program, and process data of the software program.

In an optional implementation, the terminal device may include a baseband processor and a central processing unit. The baseband processor is mainly configured to process a communication protocol and communication data. The central processing unit is mainly configured to control the entire terminal device, execute a software program, and process data of the software program.

Functions of the baseband processor and the central processing unit may be integrated into the processor in FIG. 10. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to improve a processing capability of the terminal device, and the components of the terminal device may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be embedded in the processor, or may be stored in the memory in a form of the software program. The processor executes the software program to implement a baseband processing function.

The memory 613 is mainly configured to store the software program and the data. The memory 613 may exist independently, and is connected to the processor 611. Optionally, the memory 613 and the processor 611 may be integrated together, for example, integrated in a chip, that is, the memory 613 may be an on-chip memory; or the memory 613 is an independent storage element. This is not limited in embodiments of this application. The memory 613 can store program code for executing the technical solutions in embodiments of this application, and the processor 611 controls execution of the program code. Various types of executed computer program code may also be considered as drivers of the processor 611.

The transceiver 612 may be configured to: perform conversion between a baseband signal and a radio frequency signal and process the radio frequency signal. The transceiver 612 may be connected to the antenna 616. The transceiver 612 includes a transmitter (transmitter, Tx) and a receiver (receiver, Rx). Specifically, the one or more antennas 616 may receive a radio frequency signal. The receiver Rx in the transceiver 612 is configured to: receive the radio frequency signal from the antenna, convert the radio frequency signal into a digital baseband signal or a digital intermediate frequency signal, and provide the digital baseband signal or the digital intermediate frequency signal for the processor 611, so that the processor 611 further processes the digital baseband signal or the digital intermediate frequency signal, for example, performs demodulation processing and decoding processing. In addition, the transmitter Tx of the transceiver 612 is configured to: receive a modulated digital baseband signal or digital intermediate frequency signal from the processor 611, convert the modulated digital baseband signal or digital intermediate frequency signal into a radio frequency signal, and send the radio frequency signal through the one or more antennas 616. Specifically, the receiver Rx may selectively perform one or more levels of downmixing processing and analog-to-digital conversion processing on the radio frequency signal to obtain the digital baseband signal or the digital intermediate frequency signal. A sequence of the downmixing processing and the analog-to-digital conversion processing is adjustable. The transmitter Tx may selectively perform one or more levels of upmixing processing and digital-to-analog conversion processing on the modulated digital baseband signal or digital intermediate frequency signal to obtain the radio frequency signal. A sequence of the upmixing processing and the digital-to-analog conversion processing is adjustable. The digital baseband signal and the digital intermediate frequency signal may be collectively referred to as a digital signal. Optionally, the transmitter Tx and the receiver Rx may be implemented by different physical structures/circuits, or may be implemented by a same physical structure/circuit, that is, the transmitter Tx and the receiver Rx may be integrated together.

The transceiver may also be referred to as a transceiver unit, a transceiver machine, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like. Alternatively, the Tx, the Rx, and the antenna may be combined into the transceiver.

The output device 614 displays information in a plurality of manners. For example, the output device 614 may be a liquid crystal display (Liquid Crystal Display, LCD), a light emitting diode (Light Emitting Diode, LED) display device, a cathode ray tube (Cathode Ray Tube, CRT) display device, or a projector (projector). The input device 615 may receive an input of a user in a plurality of manners. For example, the input device 615 may be a mouse, a keyboard, a touchscreen device, or a sensor device.

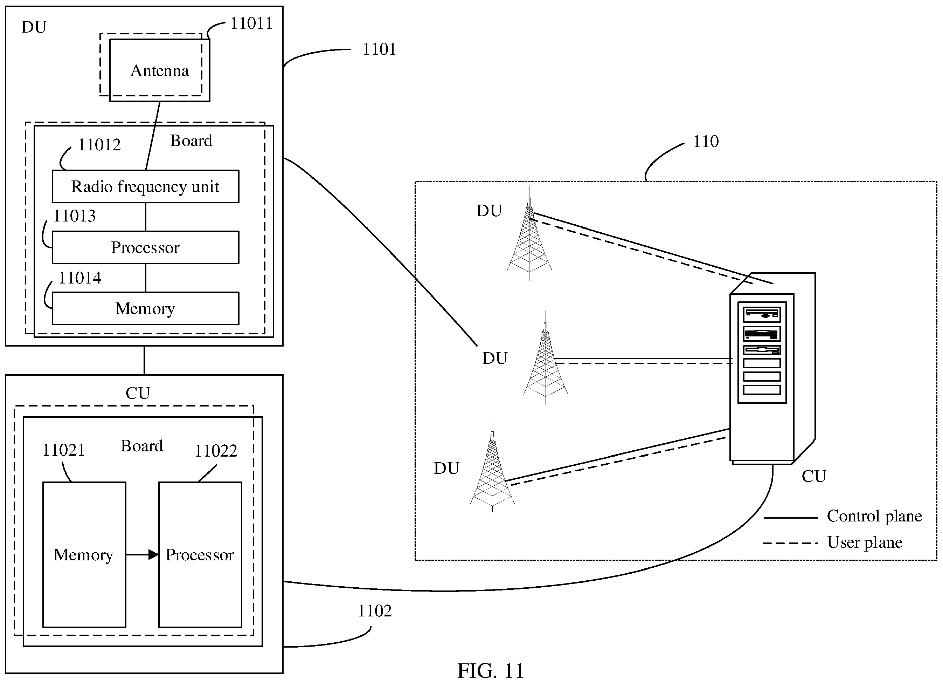

FIG. 11 is a schematic diagram of a structure of an access network device according to an embodiment of this application. For example, FIG. 11 may be a schematic diagram of a structure of an access network device that may use a CU-DU separation architecture. As shown in FIG. 11, a base station may be applied to the system shown in FIG. 1, FIG. 2, or FIG. 3, to implement a function of the access network device (the source access network device and/or the target access network device) in the foregoing method embodiments.

The access network device may include one or more DUs 1101 and one or more CUs 1102. The DU 1101 may include at least one antenna 11011, at least one radio frequency unit 11012, at least one processor 11013, and at least one memory 11014. The DU 1101 is mainly configured to: send and receive a radio frequency signal, perform conversion between a radio frequency signal and a baseband signal, and perform partial baseband processing. The CU 1102 may include at least one processor 11022 and at least one memory 11021. The CU 1102 and the DU 1101 may communicate with each other through an interface. A control plane (control plane) interface may be F1-C, and a user plane (user Plane) interface may be Fl-U.

The CU 1102 is mainly configured to: perform baseband processing, control the base station, and the like. The DU 1101 and the CU 1102 may be physically disposed together, or may be physically disposed separately, that is, a distributed base station. The CU 1102 is a control center of the base station, may also be referred to as a processing unit, and is mainly configured to complete a baseband processing function. For example, the CU 1102 may be configured to control the base station to perform an operation procedure related to the network device in the foregoing method embodiments.

Specifically, baseband processing on the CU and the DU may be divided based on a protocol layer of a wireless network. For details, refer to the foregoing content.

In an instance, the CU 1102 may include one or more boards, and a plurality of boards may jointly support a radio access network (for example, a 5G network) of a single access standard, or may separately support radio access networks (for example, an LTE network, a 5G network, or another access network) of different access standards. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board. The DU 1101 may include one or more boards, and a plurality of boards may jointly support a radio access network (for example, a 5G network) of a single access standard, or may separately support radio access networks (for example, an LTE network, a 5G network, or another access network) of different access standards. The memory 11014 and the processor 11013 may serve one or more boards. In other words, a memory and a processor may be disposed on each board. Alternatively, a plurality of boards may share a same memory and a same processor. In addition, a necessary circuit may further be disposed on each board.

Optionally, the CU 1102 may perform transmission with a child node of the access network device via the DU 1101. The CU 1102 may be connected to another access network device through an interface. The CU 1102 may receive data and/or a message from the another access network device (for example, a CU of the another access network device) through the interface, or the CU 1102 may send data and/or a message to the another access network device through the interface.

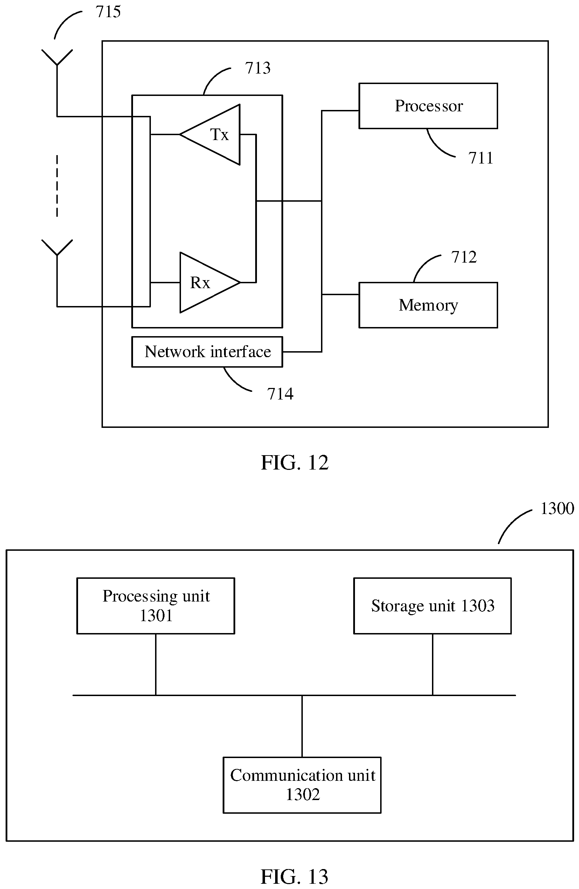

FIG. 12 is a schematic diagram of a structure of a communication apparatus according to an embodiment of this application. The communication apparatus may be a relay node, and may implement a function of the relay node (for example, an IAB node) in the foregoing method embodiments. Alternatively, the communication apparatus may be an access network device, and may implement a function of the source access network device or the target access network device in the foregoing method embodiments. For ease of description, FIG. 12 shows main components of a communication apparatus. As shown in FIG. 12,
the communication apparatus includes at least one processor 711, at least one memory 712, at least one transceiver 713, at least one network interface 714, and one or more antennas 715. The processor 711, the memory 712, the transceiver 713, and the network interface 714 are connected to each other, for example, through a bus. In embodiments of this application, the connection may include various types of interfaces, transmission lines, buses, or the like. This is not limited in embodiments. The antennas 715 are connected to the transceiver 713. The network interface 714 is configured to enable the communication apparatus to communicate with another network device through a communication link.

For the transceiver 713, the memory 712, and the antennas 716, refer to related descriptions in FIG. 10, to implement similar functions.

FIG. 13 is a schematic diagram of a structure of a communication apparatus according to an embodiment of this application. The communication apparatus may perform the method described in the foregoing method embodiments. For details, refer to the descriptions in the foregoing method embodiments. The communication apparatus may be used in a communication device, a circuit, a hardware component, or a chip. For example, the communication apparatus may be a terminal, a chip in a terminal, a donor node (including a source donor node or a target donor node), or a chip in a donor node (including a source donor node or a target donor node).

The communication apparatus 1300 includes a processing unit 1301 and a communication unit 1302. Optionally, the communication apparatus 1300 further includes a storage unit 1303.

The processing unit 1301 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data, and the central processing unit may be configured to: control an apparatus (such as a donor node, a terminal, or a chip), execute a software program, and process data of the software program.

The communication unit 1302 may be an apparatus for inputting (receiving) or outputting (sending) a signal, and is configured to perform signal transmission with another network device or another component in a device.

The storage unit 1303 may be an apparatus having a storage function, and may include one or more memories.

Optionally, the processing unit 1301, the communication unit 1302, and the storage unit 1303 are connected through a communication bus.

Optionally, the storage unit 1303 may exist independently, and is connected to the processing unit 1301 through the communication bus. The storage unit 1303 may alternatively be integrated into the processing unit 1301.

Optionally, the communication apparatus 1300 may be a chip in the terminal or the donor node in embodiments of this application. The communication unit 1302 may be an input/output interface, a pin, a circuit, or the like. The storage unit 1303 may be a register, a cache, a RAM, or the like, and the storage unit 1303 may be integrated into the processing unit 1301. The storage unit 1303 may be a ROM or another type of static storage device that can store static information and instructions. The storage unit 1303 may be independent of the processing unit 1301. Optionally, with development of wireless communication technologies, the transceiver may be integrated into the communication apparatus 1300. For example, the transceiver 612 shown in FIG. 10 is integrated into the communication unit 1302.

In a possible design, the processing unit 1301 may include instructions, and the instructions may be run on the processor, so that the communication apparatus 1300 performs the method of the terminal or the donor node in the foregoing embodiments.

In another possible design, the storage unit 1303 stores instructions, and the instructions may be run on the processing unit 1301, so that the communication apparatus 1300 performs the method of the terminal or the donor node in the foregoing embodiments. Optionally, the storage unit 1303 may further store data. Optionally, the processing unit 1301 may also store instructions and/or data.

The communication apparatus 1300 may be the terminal in embodiments of this application. FIG. 10 may be a schematic diagram of the terminal. Optionally, the communication unit 1302 of the apparatus 1300 may include an antenna and a transceiver of the terminal, for example, the antenna and the transceiver in FIG. 10. Optionally, the communication unit 1302 may further include an output device and an input device, for example, the output device and the input device in FIG. 10.

When the communication apparatus 1300 may be the terminal in embodiments of this application or the chip of the terminal, the communication apparatus 1300 may implement functions implemented by the terminal in the foregoing method embodiments.

When the communication apparatus 1300 may be the relay node in embodiments of this application or a chip of the relay node, the communication apparatus 1300 may implement functions implemented by the relay node in the foregoing method embodiments.

When the communication apparatus 1300 may be a chip of the access network device (for example, the source access network device or the target access network device) in embodiments of this application, the communication apparatus 1300 may implement a function of the donor node in the foregoing method embodiments.

The foregoing describes the method flowcharts in embodiments of this application. It should be understood that the terminal may have a functional unit (means) corresponding to a method or step of the terminal, the relay node may have a functional unit corresponding to a method or step of the relay node, a source donor node (for example, a CU and/or a DU) may have a functional unit corresponding to a method or step of the source donor node (for example, the CU and/or the DU), the target donor node (for example, a CU and/or a DU) may have a functional unit corresponding to a method or a step of the target donor node (for example, the CU and/or the DU), and a CU of the source donor node may have a functional unit corresponding to a method or a step of the CU of the source donor node. In addition, another node in the relay system may have a functional unit corresponding to the another node. One or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedure.

The processor in this application may include but is not limited to at least one of the following computing devices that run software: a central processing unit (central processing unit, CPU), a microprocessor, a digital signal processor (DSP), a microcontroller unit (microcontroller unit, MCU), or an artificial intelligence processor. Each computing device may include one or more cores configured to perform an operation or processing by executing software instructions. The processor may be an independent semiconductor chip, or may be integrated with another circuit into a semiconductor chip. For example, the processor and another circuit (such as a codec circuit, a hardware acceleration circuit, or various buses and interface circuits) may form a system-on-a-chip (system-on-a-chip, SoC). Alternatively, the processor may be integrated into an application-specific integrated circuit (application-specific integrated circuit, ASIC) as a built-in processor of the ASIC. The ASIC integrated with the processor may be independently packaged or may be packaged with another circuit. The processor includes a core for executing software instructions to perform an operation or processing, and may further include a necessary hardware accelerator, for example, a field programmable gate array (field programmable gate array, FPGA), a programmable logic device (programmable logic device, PLD), or a logic circuit that implements a special-purpose logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory is not limited thereto.

In addition to a data bus, the bus may further include a power bus, a control bus, a status signal bus, and the like. However, for clear description, various types of buses in the figures are marked as the bus.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

According to the methods provided in embodiments of this application, an embodiment of this application further provides a system, including the foregoing apparatuses and one or more network devices.

It should be further understood that first, second, third, fourth, and various numbers in this specification are differentiated merely for ease of description, but are not used to limit the scope of embodiments of this application. The numbers may be replaced with other numbers.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatuses, and methods may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, a magnetic tape), an optical medium (for example, a digital versatile disc (digital versatile disc, DVD)), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method applied to an integrated access and backhaul IAB system, wherein the method comprises:
receiving, by a child node, a first radio resource control RRC reconfiguration message from an access network device via a parent node, wherein the first RRC reconfiguration message comprises a random access-free indication;
starting, by the child node, a timer;
sending, by the child node, a first RRC reconfiguration complete message to the access network device via the parent node;
receiving, by the child node, first indication information from the parent node, wherein the first indication information indicates to stop the timer; and
stopping, by the child node, the timer.

2. The method according to claim 1, wherein the first indication information is a first-type media access control control element MAC CE, or the first indication information is a MAC CE carrying a contention resolution identity.

3. The method according to claim 1 or 2, wherein the first RRC reconfiguration message does not comprise a cell radio network temporary identifier of the child node;
the first RRC reconfiguration message comprises second indication information indicating that a cell radio network temporary identifier of the child node remains unchanged; or
the first RRC reconfiguration message comprises a cell radio network temporary identifier used before the child node receives the first RRC reconfiguration message.

4. The method according to any one of claims 1 to 3, further comprising:
receiving, by the parent node, third indication information from the access network device; and
sending, by the parent node, the first indication information to the child node in response to the third indication information.

5. The method according to claim 4, wherein the third indication information comprises an identifier of the child node.

6. The method according to any one of claims 1 to 5, wherein the access network device is a target access network device of the child node and the parent node in a group handover process.

7. The method according to claim 6, wherein the method further comprises:
after the parent node receives the first RRC reconfiguration message from the access network device or sends the first RRC reconfiguration message to the child node, receiving, by the parent node, a second RRC reconfiguration message from the access network device, and starting, by the parent node, a timer.

8. The method according to claim 7, wherein the method further comprises:
after the parent node receives the first RRC reconfiguration message from the access network device or sends the first RRC reconfiguration message to the child node, sending, by the parent node, fourth indication information to a source access network device, so as to trigger the source access network device to send the second RRC reconfiguration message to the parent node, wherein the source access network device is a source access network device of the child node and the parent node in the group handover process.

9. The method according to any one of claims 1 to 8, wherein the child node is a terminal or an IAB node, and the parent node is an IAB node.

10. A communication method applied to an integrated access and backhaul IAB system, wherein the method comprises:
receiving, by a parent node, a first RRC reconfiguration message from an access network device, wherein the first RRC reconfiguration message comprises a random access-free indication;
sending, by the parent node, the first RRC reconfiguration message to a child node, to trigger the child node to start a timer;
receiving, by the parent node, a first RRC reconfiguration complete message from the child node;
sending, by the parent node, the first RRC reconfiguration complete message to the access network device; and
sending, by the parent node, first indication information to the child node, wherein the first indication information indicates to stop the timer.

11. The method according to claim 10, wherein the method further comprises:
receiving, by the parent node, second indication information from the access network device; and
sending, by the parent node, the first indication information to the child node in response to the second indication information.

12. The method according to claim 11, wherein the second indication information comprises an identifier of the child node.

13. The method according to any one of claims 10 to 12, wherein the first indication information is a first-type media access control control element MAC CE, or the first indication information is a MAC CE carrying a contention resolution identity.

14. The method according to any one of claims 10 to 13, wherein the first RRC reconfiguration message does not comprise a cell radio network temporary identifier of the child node;
the first RRC reconfiguration message comprises third indication information indicating that a cell radio network temporary identifier of the child node remains unchanged; or
the first RRC reconfiguration message comprises a cell radio network temporary identifier that is of the child node and that is used before the parent node sends the first RRC reconfiguration message to the child node.

15. The method according to any one of claims 10 to 14, wherein the access network device is a target access network device of the child node in a group handover process.

16. The method according to claim 15, wherein the method further comprises:
after the parent node receives the first RRC reconfiguration message from the access network device or sends the first RRC reconfiguration message to the child node, receiving, by the parent node, a second RRC reconfiguration message from the access network device, and starting, by the parent node, a timer.

17. The method according to claim 16, wherein the method further comprises:
after the parent node receives the first RRC reconfiguration message from the access network device or sends the first RRC reconfiguration message to the child node, sending, by the parent node, fourth indication information to a source access network device, so as to trigger the source access network device to send the second RRC reconfiguration message to the parent node, wherein the source access network device is a source access network device of the child node and the parent node in the group handover process.

18. The method according to any one of claims 10 to 17, wherein the child node is a terminal or an IAB node, and the parent node is an IAB node.

19. A communication method applied to an integrated access and backhaul IAB system, wherein the method comprises:
sending, by an access network device, a first radio resource control RRC reconfiguration message to a child node via a parent node, so as to trigger the child node to start a timer, wherein the first RRC reconfiguration message comprises a random access-free indication;
receiving, by the access network device, a first RRC reconfiguration complete message from the child node via the parent node; and
sending, by the access network device, second indication information to the parent node, so as to trigger the parent node to send first indication information to the child node, wherein the first indication information indicates to stop the timer.

20. The method according to claim 19, wherein the second indication information comprises an identifier of the child node.

21. The method according to claim 19 or 20, wherein the first indication information is a first-type media access control control element MAC CE, or the first indication information is a MAC CE carrying a contention resolution identity.

22. The method according to any one of claims 19 to 21, wherein the first RRC reconfiguration message does not comprise a cell radio network temporary identifier of the child node;
the first RRC reconfiguration message comprises third indication information indicating that a cell radio network temporary identifier of the child node remains unchanged; or
the first RRC reconfiguration message comprises a cell radio network temporary identifier that is of the child node and that is used before the access network device sends the first RRC reconfiguration complete message to the child node via the parent node.

23. The method according to any one of claims 1 to 5, wherein the access network device is a target access network device of the child node in a group handover process.

24. The method according to claim 23, wherein the method further comprises:
receiving, by the target access network device, a handover request message from a source access network device, wherein the handover request message comprises one or more of the following: the cell radio network temporary identifier of the child node before handover, an identifier of a cell accessed by the child node before handover, and hierarchical information of the child node in a network topology, and the source access network device is a source access network device of the child node and the parent node in the group handover process.

25. The method according to claim 24, wherein the method further comprises:
determining, by the target access network device, duration of the timer based on the hierarchical information, wherein
the first RRC reconfiguration message comprises information about the duration of the timer.

26. A communication method applied to an integrated access and backhaul IAB system, wherein the method comprises:
receiving, by a child node, a first radio resource control RRC reconfiguration message from an access network device; and
performing, by the child node, handover based on the first RRC reconfiguration message, wherein
a cell radio network temporary identifier of the child node before the handover is the same as a cell radio network temporary identifier after the handover.

27. The method according to claim 26, wherein the first RRC reconfiguration message does not comprise the cell radio network temporary identifier of the child node; the first RRC reconfiguration message comprises first indication information indicating that the cell radio network temporary identifier of the child node remains unchanged; or the first RRC reconfiguration message comprises the cell radio network temporary identifier used before the child node receives the first RRC reconfiguration message.

28. The method according to claim 26 or 27, wherein the first RRC reconfiguration message comprises a random access-free indication.

29. The method according to claim 28, wherein the method further comprises:
starting, by the child node, a timer;
sending, by the child node, a first RRC reconfiguration complete message to the access network device via a parent node;
receiving, by the child node, second indication information from the parent node, wherein the second indication information indicates to stop the timer; and
stopping, by the child node, the timer.

30. The method according to claim 29, wherein the second indication information is a first-type media access control control element MAC CE, or the second indication information is a MAC CE carrying a contention resolution identity.

31. The method according to claim 29 or 30, further comprising:
receiving, by the parent node, third indication information from the access network device; and
sending, by the parent node, the second indication information to the child node in response to the third indication information.

32. The method according to claim 31, wherein the third indication information comprises an identifier of the child node.

33. The method according to any one of claims 26 to 32, wherein the access network device is a target access network device of the child node and the parent node in a group handover process.

34. The method according to claim 33, wherein the method further comprises:
after the parent node receives the first RRC reconfiguration message from the access network device or sends the first RRC reconfiguration message to the child node, receiving, by the parent node, a second RRC reconfiguration message from the access network device, and starting, by the parent node, a timer.

35. The method according to claim 34, wherein the method further comprises:
after the parent node receives the first RRC reconfiguration message from the access network device or sends the first RRC reconfiguration message to the child node, sending, by the parent node, fourth indication information to a source access network device, so as to trigger the source access network device to send the second RRC reconfiguration message to the parent node, wherein the source access network device is a source access network device of the child node and the parent node in the group handover process.

36. The method according to any one of claims 1 to 8, wherein the child node is a terminal or an IAB node, and the parent node is an IAB node.

37. A communication method applied to an integrated access and backhaul IAB system, wherein the method comprises:
obtaining, by an access network device, a first radio resource control RRC reconfiguration message; and
sending, by the access network device, the first RRC reconfiguration message to a child node, wherein
the first RRC reconfiguration message is used for handover of the child node, and a cell radio network temporary identifier of the child node before the handover is the same as a cell radio network temporary identifier of the child node after the handover.

38. The method according to claim 37, wherein the first RRC reconfiguration message does not comprise the cell radio network temporary identifier of the child node; the first RRC reconfiguration message comprises first indication information indicating that the cell radio network temporary identifier of the child node remains unchanged; or the first RRC reconfiguration message comprises the cell radio network temporary identifier used before the child node receives the first RRC reconfiguration message.

39. The method according to claim 37 or 38, wherein the first RRC reconfiguration message comprises a random access-free indication.

40. The method according to claim 39, wherein the method further comprises:
receiving, by the access network device, a first RRC reconfiguration complete message from the child node via a parent node; and
sending, by the access network device, second indication information to the parent node, so as to trigger the parent node to send third indication information to the child node, wherein the third indication information indicates to stop a timer.

41. The method according to claim 40, wherein the second indication information comprises an identifier of the child node.

42. The method according to claim 40 or 41, wherein the third indication information is a first-type media access control control element MAC CE, or the third indication information is a MAC CE carrying a contention resolution identity.

43. The method according to any one of claims 37 to 42, wherein the access network device is a target access network device of the child node in a group handover process.

44. The method according to claim 43, wherein the method further comprises:
receiving, by the target access network device, a handover request message from a source access network device, wherein the handover request message comprises one or more of the following: the cell radio network temporary identifier of the child node before the handover, an identifier of a cell accessed by the child node before the handover, and hierarchical information of the child node in a network topology, and the source access network device is a source access network device of the child node and the parent node in the group handover process.

45. The method according to claim 44, wherein the method further comprises:
determining, by the target access network device, duration of the timer based on the hierarchical information, wherein
the first RRC reconfiguration message comprises information about the duration of the timer.

46. A communication apparatus, comprising at least one processor, wherein the at least one processor is configured to invoke a program stored in a memory, to perform the method according to any one of claims 1 to 3 or any one of claims 26 to 30.

47. A communication apparatus, comprising at least one processor, wherein the at least one processor is configured to invoke a program stored in a memory, to perform the method according to any one of claims 10 to 18.

48. A communication apparatus, comprising at least one processor, wherein the at least one processor is configured to invoke a program stored in a memory, to perform the method according to any one of claims 19 to 25 or any one of claims 37 to 45.

49. A chip, wherein the chip comprises a processor and a communication interface, the communication interface is coupled to the processor, and the processor is configured to run a computer program or instructions, so that the method according to any one of claims 1 to 3 or any one of claims 26 to 30 is performed.

50. A chip, wherein the chip comprises a processor and a communication interface, the communication interface is coupled to the processor, and the processor is configured to run a computer program or instructions, so that the method according to any one of claims 10 to 18 is performed.

51. A chip, wherein the chip comprises a processor and a communication interface, the communication interface is coupled to the processor, and the processor is configured to run a computer program or instructions, so that the method according to any one of claims 19 to 25 or any one of claims 37 to 45 is performed.

52. An apparatus, wherein the apparatus is configured to perform the method according to any one of claims 1 to 3 or any one of claims 26 to 30.

53. An apparatus, wherein the apparatus is configured to perform the method according to any one of claims 10 to 18.

54. An apparatus, wherein the apparatus is configured to perform the method according to any one of claims 19 to 25 or any one of claims 37 to 45.

55. A computer-readable storage medium, storing a program or instructions used to implement the method according to any one of claims 1 to 3, any one of claims 26 to 30, any one of claims 10 to 18, any one of claims 19 to 25, or any one of claims 37 to 45.

56. A computer program product, wherein the computer program product comprises instructions; and when the instructions are run, the method according to any one of claims 1 to 3, any one of claims 26 to 30, any one of claims 10 to 18, any one of claims 19 to 25, or any one of claims 37 to 45 is performed.

57. A communication system, wherein the communication system comprises one or more of the apparatus according to claim 46 or 49, the apparatus according to claim 47 or 50, and the apparatus according to claim 48 or 51.
